# EUROPEAN PATENT SPECIFICATION

(11) **EP 2 022 322 B1**
(45) Date of publication and mention of the grant of the patent: **26.01.2011**
(21) Application number: 07014863.0
(22) Date of filing: 30.07.2007
(51) Int. Cl.: A01G 9/08, B65B 1/38, B65B 25/02

(54) **Plant for filling automatically pressed peat or the like into containers for cultivations of plants and vegetables of various kind**
Anlage zum automatischen Abfüllen von gepresstem Torf o.Ä. in Behälter zum Anbau von verschiedenen Pflanzen- und Gemüsearten
Usine pour l'introduction automatique de tourbe compressée dans des récipients pour la culture de plantes et de légumes de divers types

(43) Date of publication of application: 11.02.2009
(73) Proprietor: META s.r.l., 31015 Conegliano (TV) (IT)
(72) Inventor: Minatel, Gianpaolo, 31015 Conegliano (TV) (IT)
(74) Representative: Dalla Rosa, Adriano

(56) References cited:
- DE-A1- 2 050 885
- NL-A- 9 101 263

## Description

The invention relates to a plant for filling automatically pressed peat or the like into containers for cultivations of plants and vegetables of various kind, such as flowers and plants for vegetable, flower and nursery cultivations.

Plants for filling automatically and continuously pressed peat or the like into containers for cultivations of the kind referred to are known, which are housed into suitably shaped and sized boxes, in which the containers are firstly filled with the peat in the plants referred to and some cavities are provided in the peat for collecting the seeds of the various kind of cultivations, and then such boxes are drawn from the plant and displaced near specific automatic sowing plants, in which the seeds of the required kinds of cultivations, contained into suitable collecting reservoirs, are conveyed from such reservoirs into the peat cavities of each container, by remaining in this position in which the seeds can then develop into this natural manure, and the so treated boxes and finally drawn and sold to the growers.

These kinds of plants for filling pressed peat with various cylinder or cubical shapes are substantially constituted by a metallic support structure housing an automatic sliding conveyor band or chain, in which the peat drawn by adequate mixers or further separated conveyor bands or chains is loaded, such support structure defining a loading station and a filling station, separated and adjacent to each other and adapted respectively to introduce the peat conveyed by the conveyor band or chain into a collecting chamber associated with a movable die, driven by particular driving mechanisms, and to fill with the peat, which is introduced into the relative inner cavities of the movable die, the containers housed into the boxes which are loaded on to an additional conveyor band and conveyed by this latter in coincidence with the movable die. In particular, such movable die is displaced initially into a first operative position, situated on the peat loading station and coinciding with a compression box which is filled with a part of the peat contained into the collecting chamber, and in this position the peat is introduced and pressed into the die inner cavities by an underlying vertically sliding hydraulic cylinder. Then, the movable die is displaced into a second operative position, situated on the filling station and coinciding with an underlying box housing the containers to be filled, which has been arranged on to the additional conveyor band and conveyed by the same in this position, and under this condition the collecting chamber is displaced over the compression box, thereby filling again this latter with the peat. Afterwards, such additional conveyor band is raised by means of an adequate raising mechanism associated thereto, thereby providing to rest or approach the box on the movable die lower portion which has been filled with pressed peat and to fill consequently the box containers with the pressed peat contained in the movable die. Finally, the movable die is brought again, together with the collecting chamber, into the first operative position in which it arranges itself again over the compression box, in order to be subsequently filled again with the pressed peat, while the collecting chamber is arranged for being loaded with additional peat, and the box with the containers filled with pressed peat is displaced by the additional conveyor band toward the unloading area of the same band, in which such box is drawn, thereby arranging the same band for loading a further box with containers to be filled.

The boxes filled with pressed peat are stacked on appropriate de-stacking devices, arranged near the loading end of the additional conveyor band, and are then disposed by the de-stacking devices on to such additional conveyor band, for being conveyed toward the filling station as described above. The so realized plants comprise such operative components as to allow a semi-automatic and discontinuous operation thereof, which during each working cycle makes it necessary to perform some manual workings both for starting and stopping the sliding of the box conveyor band and for positioning correctly the boxes with the containers on to the same conveyor band, in order to avoid that the boxes arrange themselves below the die at not correct positions, under the condition in which such boxes could be damaged by the die during the filling steps with pressed peat of the containers supported by the same boxes, by damaging in such case the plant operative components too. A further drawback of these kinds of plants is constituted by the fact that the die has a complicate construction and needs complex, long and difficult operations for being assembled and disassembled both for being substituted with other dies having different sizes, when there are required workings with other kinds of boxes and containers to be filled with pressed peat, and for maintenance or repair interventions. Therefore, the object of the present invention is to realize a plant for filling pressed peat into containers for cultivations of various kind, in which the above mentioned drawbacks and applicative limits of the current plants of this kind are eliminated, and which allows automatic and continuous working cycles to be performed, without requiring the intervention of the operators, by permitting also to disassemble and assemble the die in a simple and quick manner, and to realize also a high productivity and a better working flexibility of the same plant. These and other objects are obtained, according to the invention, by means of an automatic filling plant made with the constructive characteristics substantially described, with particular reference to the enclosed claims of the present patent.

The invention will be better understood by the following description, given by way of not limiting example and with reference to the accompanying drawings in which :
- Fig. 1 shows a front view of the filling plant according to the invention, with its movable die displaced in an initial rest position ;
- Fig. 2 shows a side view of the filling plant according to the invention ;
- Fig. 3 shows a front view of the movable die of the plant according to the invention ;
- Fig. 4 shows a side view of the movable die of Fig. 3, without the mechanism for raising and lowering the same die ;
- Fig. 5 shows an enlarged and partially cutaway front view of some component parts of the movable die of Fig. 3, displaced in the operative rest position ;
- Figs. 6 and 7 show a cutaway front view of some constructive items of the movable die of Fig. 3, displaced respectively into two different operative positions ;
- Fig. 8 shows a side view of the movable die of Fig. 5, without the raising and lowering mechanism of the same die ;
- Fig. 9 shows and enlarged and partially cutaway front view of other component parts of the movable die of Fig. 5, also displaced in the operative rest position ;
- Figs. 10 and 11 show a schematic side view of the same constructive items of the movable die of Figs. 6 and 7, also displaced into two different operative positions ;
- Fig. 12 shows a front view of the same constructive items of the movable die of Fig. 5, displaced in the operative working position ;
- Fig. 13 shows an enlarged and partially cutaway front view of other component parts of the movable die of Fig. 3, displaced in the operative rest position ;
- Fig. 14 shows a side view of the die of Fig. 13, without the mechanism for raising and lowering the same die ;
- Fig. 15 shows a side view of the movable die, including all the component parts except the raising and lowering mechanism thereof ;
- Fig. 16 shows a side view of the movable die, with the raising and lowering mechanism thereof only ;
- Fig. 17 shows a partially cutaway front view of two additional component parts of the movable die, which is displaced in its rest position ;
- Fig. 18 shows a partially cutaway front view of the two additional component parts of the movable die, which is displaced in its working position ;
- Figs. 19 and 20 show a partially cutaway front view of a part of the movable die including one of the additional component parts of Fig. 17, respectively displaced in the rest and working position ;
- Figs. 21 and 22 show a partially cutaway front view of another part of the movable die including the remaining component part of Fig. 17, respectively displaced in the rest and working position ;
- Figs. 23 and 24 show a respective front and side view of the movable die lower portion, including an additional component part ;
- Fig. 25 shows a partially cutaway front view of the additional conveyor band for conveying the boxes, mounted on the filling plant according to the invention and displaced in its rest position ;
- Figs. 26 and 27 show with respective front and plan views the additional conveyor band of the Fig. 25 ;
- Figs. 28 and 29 show a partially cutaway and enlarged front view of the additional conveyor band of Fig. 25, displaced in two different operative steps ;
- Figs. 30 and 31 show a partially cutaway front view of the additional conveyor band of Fig. 25, displaced in its working position in two steps subsequent to each other ;
- Fig. 32 shows a side view of the additional conveyor band of Fig. 25, cutaway along the line A-A of Fig. 1 ;
- Fig. 33 shows a partially cutaway side view of a component part of the additional conveyor band of Fig. 25 ;
- Figs. 34, 35, 36, 37, 38 and 39 show a front view of the filling plant according to the invention, displaced in different working positions.

The above Figures represent schematically a plant for filling automatically and continuously 5 according to the invention, adapted to fill with pressed peat or the like some containers for cultivations of various kind, such as flowers and vegetables for vegetable, flower and nursery cultivations, which are housed into corresponding pits of boxes (not shown) of different types, shapes and sizes, which are stacked on adequate de-stacking devices (also not shown) of per se known type, arranged near the present filling plant, and from which such boxes with the relative containers are automatically drawn and introduced into the plant referred to, in the manner which will be described later on.

The present filling plant is substantially constituted by a metallic support structure 6 having box-like shape, laid on the floor by means of a set of lower feet 7 and supporting a continuously sliding conveyor band or chain 8, driven in a single advancement direction A by at least an electric motor (not shown) and housed along the peripheral edge of the support structure, which band is loaded with the peat or the like which is drawn by adequate mixers or by additional separated conveyor bands or chains, such support structure defining a loading station 9 and a filling station 10, which are separated and adjacent to each other, of which the loading station is realized as it will be described and is adapted to introduce in the interior of the plant the peat loaded on to the conveyor band or chain 8 and conveyed by the same, and the filling station is adapted to fill with the pressed peat the containers of the boxes.

The loading station 9 is formed by a metallic box-like container 11 having vertical extent defining a collecting chamber 12 for the peat, and by a movable die 13 disposed at a central position of the support structure 6, and joined with such box-like container 11, which is situated laterally the movable die, at a position comprised between this latter and the vertical stanchions 14 of the support structure 6, defining the rear side of the same support structure.

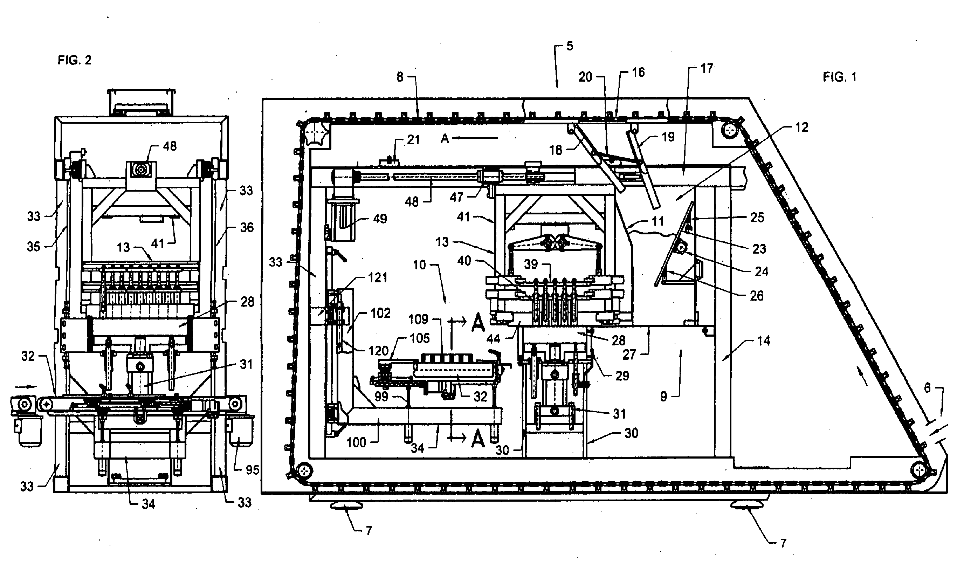

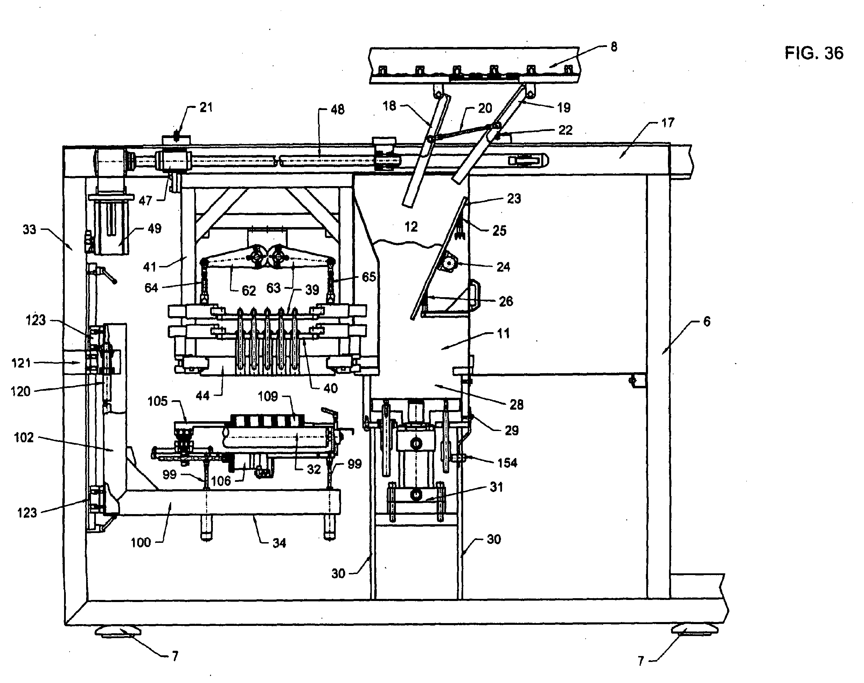

In this way, the assembly box-like container 11-movable die 13 may be displaced as it will be described in the longitudinal direction in the interior of the support structure 6, from the one to the other one of the two end of stroke positions shown in the Fig. 1 and 36 during the different plant working operative steps. The box-like container 11 is shaped with an upper part 15 with a shape enlarged and tapered downward, which in both the end of stroke positions of the box-like container is situated at a position coinciding with at least an upper through opening 16 provided on the upper crosspieces 17 of the conveyor band 8, defining the upper side of the same, through which opening the peat being conveyed by the conveyor band 8 is being passed, therefore coming by gravity into the collecting chamber 12. Along the side edges of the through opening 16 there are articulated two chutes 18 and 19 turned toward the collecting chamber 12, which are articulated to each other by means of arms 20, and therefore may displace themselves into different positions during the displacement of the box-like container 11 and the movable die 13 into the two end of stroke positions, by maintaining their respective free end portions always introduced into the collecting chamber 12 of such box-like container 11 and thereby allowing to guide through them the peat being conveyed by the conveyor band 8 and introduced into the same collecting chamber.

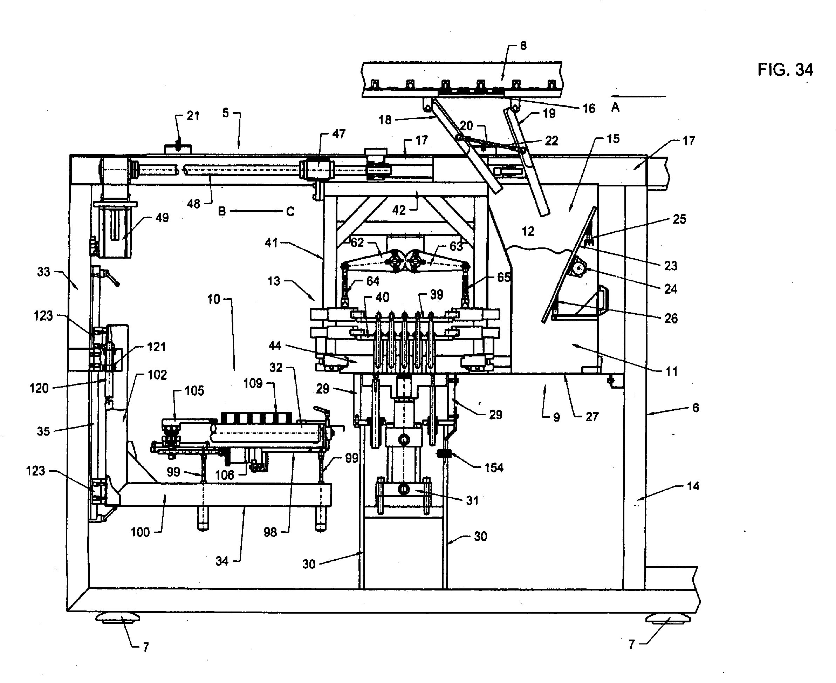

A first and a second safety proximity sensor 21 and 22 (see Fig. 34) are secured to the upper crosspieces 17, which sensors are spaced away therefrom of an extent equal to the maximal stroke which must be performed by the assembly box-like container 11-movable die 13, said safety sensors 21 and 22 being connected operatively in the plant electric circuit and actuated by the displacement of the movable die 13 in either one position of end of stroke and extra stroke of the same die, in a manner to stop such movable die and the box-like container in the respectively attained position. The displacement length of such movable die 13 is determined from time to time in the manner which will be described hereinafter, depending on the size of the boxes and the relative containers to be filled with pressed peat. In the interior of the box-like container 11 it is housed a rectilinear vibrating plane 23, at an inclined position thereof, which is actuated with quick vibratory movements by means of a vibratory device 24 of per se known type during the loading of peat into the collecting chamber, in order to make easier the sliding of peat downward along the walls of the box-like container 11, so as to prevent the peat to remain attached to the same walls and to obstruct its penetration into the collecting chamber. Moreover, in the interior of the box-like container 11 there are also secured at least two dampening elements 25 and 26, such as rubbers, adapted to avoid the transmission of the vibrations of the vibrating plane 23 to the remaining plant metallic parts. Besides, in the box-like container 11 there are housed also two level sensors (not shown) connected operatively to the plant electric circuit and adapted respectively to detect a maximum and a minimum filling level of peat into the collecting chamber 12, said sensors being adapted to control the driving motor of the peat conveyor band 8, in a way to permit or prevent the advancement of the same band depending on the respectively attained filling levels.

In particular, when the minimum filling level of peat into the collecting chamber 12 is attained, for which it wouldn't be possible to fill with peat the containers, this level is detected by the lower level sensor which provides to control the advancement of the conveyor band 8, thereby determining the loading of additional peat quantities into the collecting chamber 12, up to reach the maximum filling level which is detected by the upper level sensor, which provides to control the stop of the advancement of the conveyor band 8, with consequent end of loading the peat.

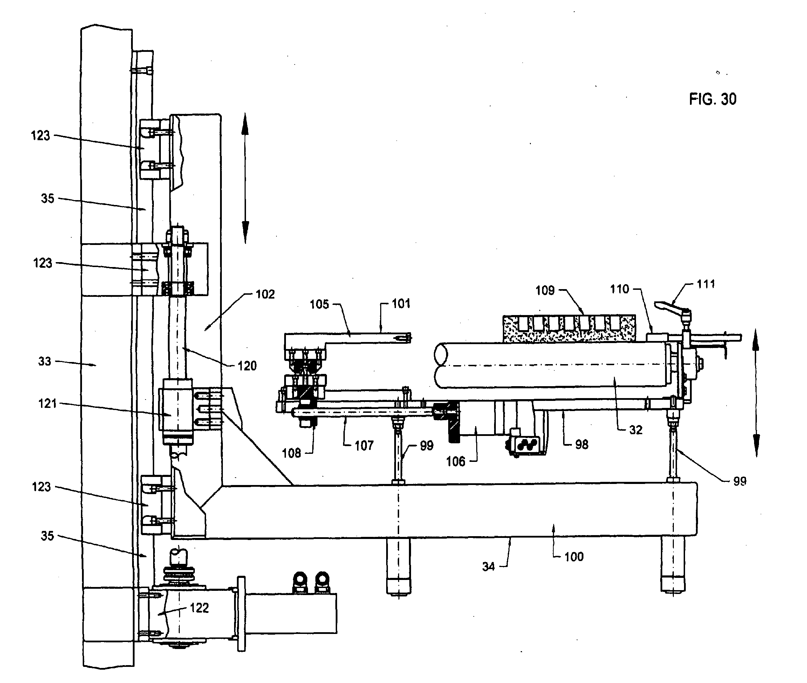

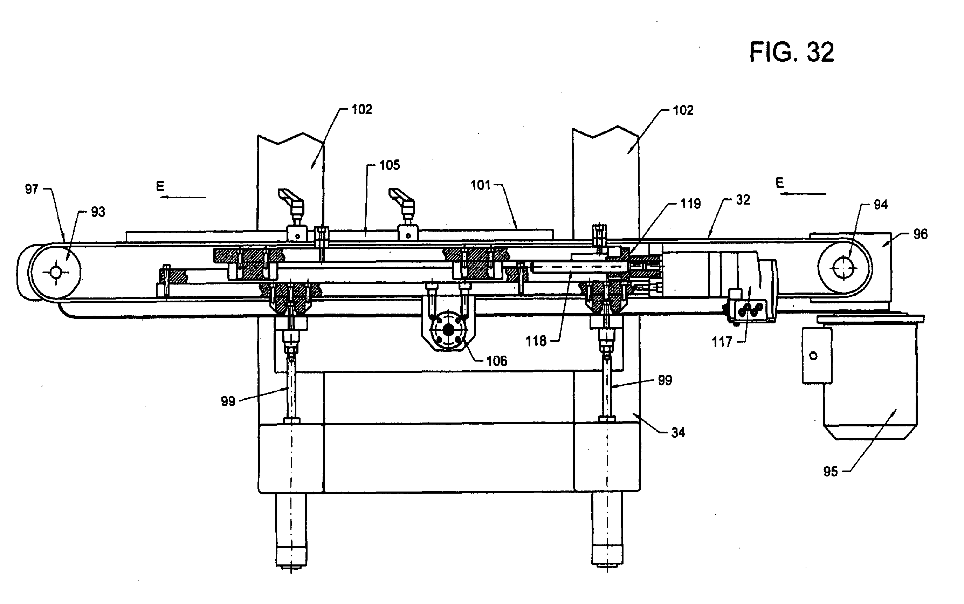

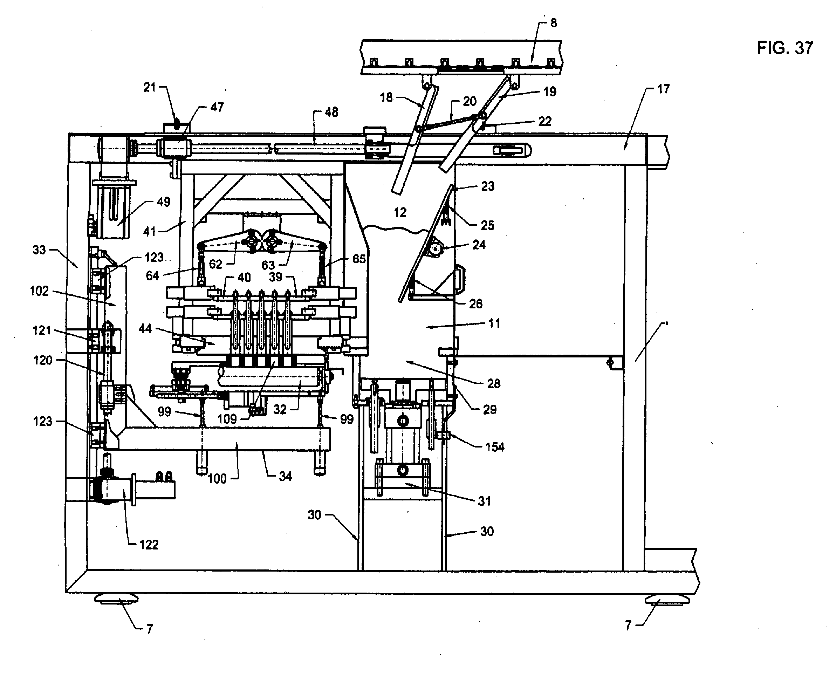

Finally, the box-like container 11 is perforated on its lower wall 27, so as to allow to introduce by gravity the peat, contained into its collecting chamber 12, on an underlying open chamber 28 provided in a compression box 29, vertically slidable along vertical guide members 30 secured on the central part of the plant support structure 6 and actuated in a vertical direction by an underlying hydraulic cylinder 31, which is also secured to the support structure 6, and such introduction of the peat is effected when the box-like container 11 is displaced into its position coinciding with such open chamber 28. The filling plant according to the invention is also constituted by an additional conveyor band 32 extended in the transversal direction of the same plant, which is situated between the compression box 29 and the vertical stanchions 33 defining the plant front side and is supported by a relative metallic L-shaped support structure 34, slidable in a vertical direction along corresponding guide members 35 and 36 (see Fig. 30) secured to such vertical stanchions 33, with a stroke defined between a lowered rest position, indicated on the Fig. 1, and a raised working position visible on the Fig. 37, and vice versa. This additional conveyor band 32 is situated in the filling station 10 of the plant referred to and is provided for arranging onto it a box at a time to be filled with pressed peat, and for conveying such box at first in correspondence to the movable die 13, when this latter is displaced in its left hand displaced working position (see Figs. 36 and 37), in a position coincident to that of the box supported by the conveyor band 32, under the condition in which such box is filled with peat pressed as it will be described hereinafter, and then for unloading such box filled with pressed peat in the unloading area 37 of the conveyor band 32 (see Fig. 32), so as to arrange this latter for loading a further box. In particular, the boxes are stacked into particular stacking devices (not shown) of per se known type, which are disposed near the loading end portion 38 of the additional conveyor band 32 (see Fig. 32), and they are then automatically arranged by the de-stacking devices on to the conveyor band 32, so as to be able to be conveyed toward the filling station 10 in the manner which will be described.

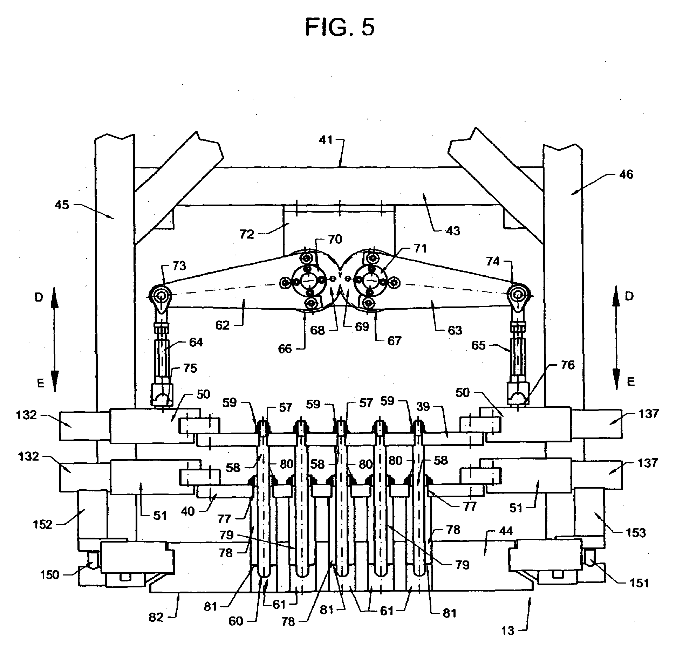

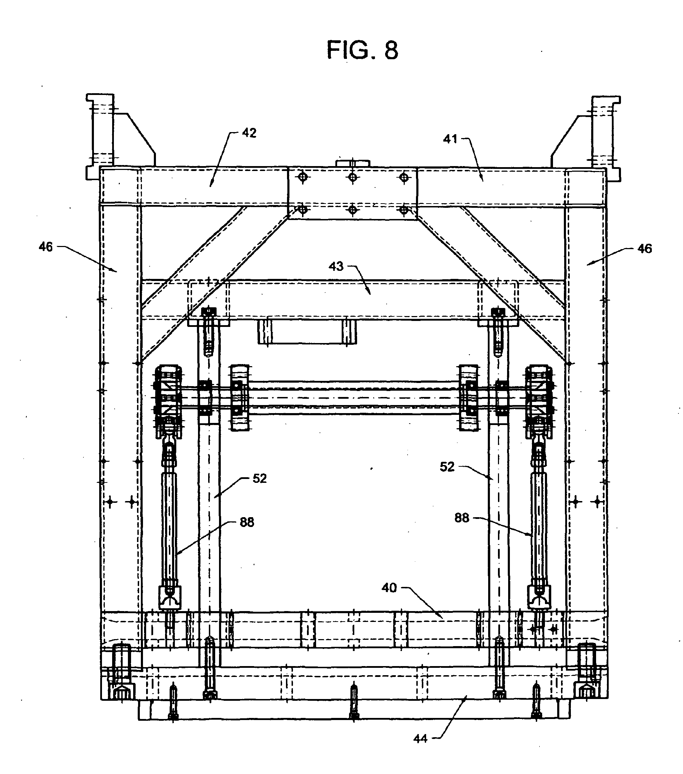

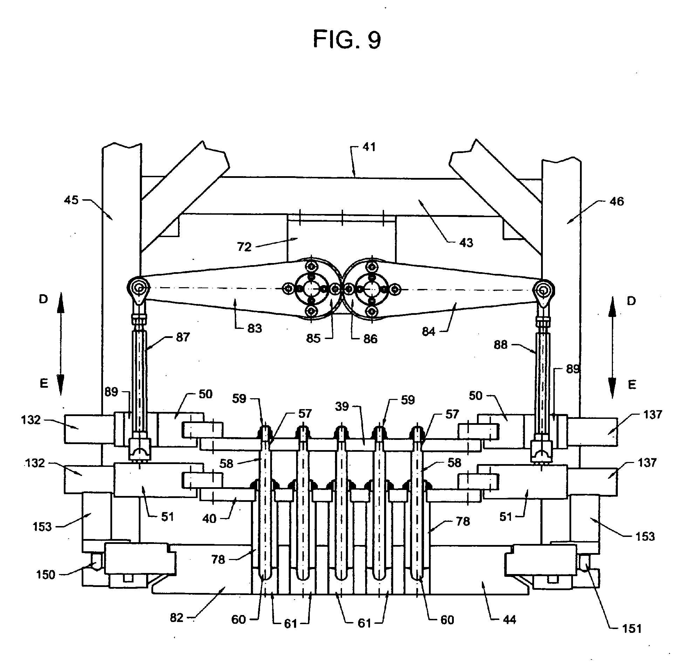

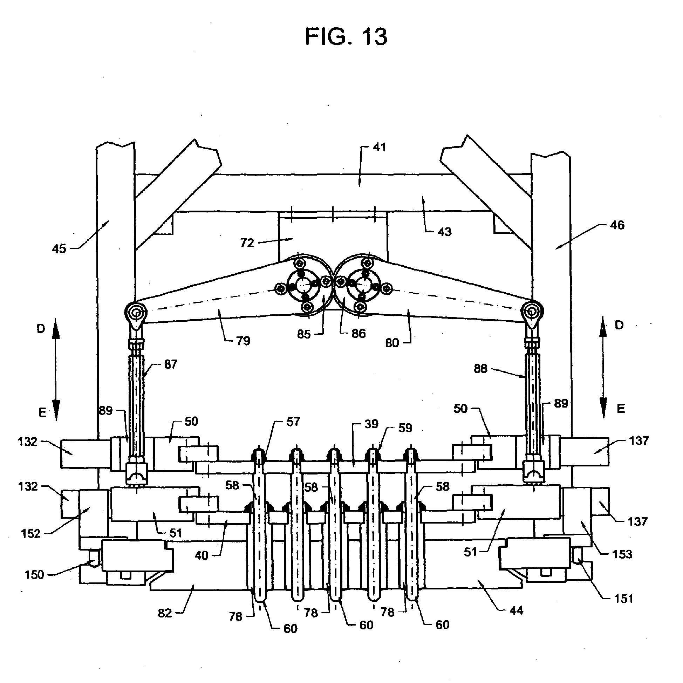

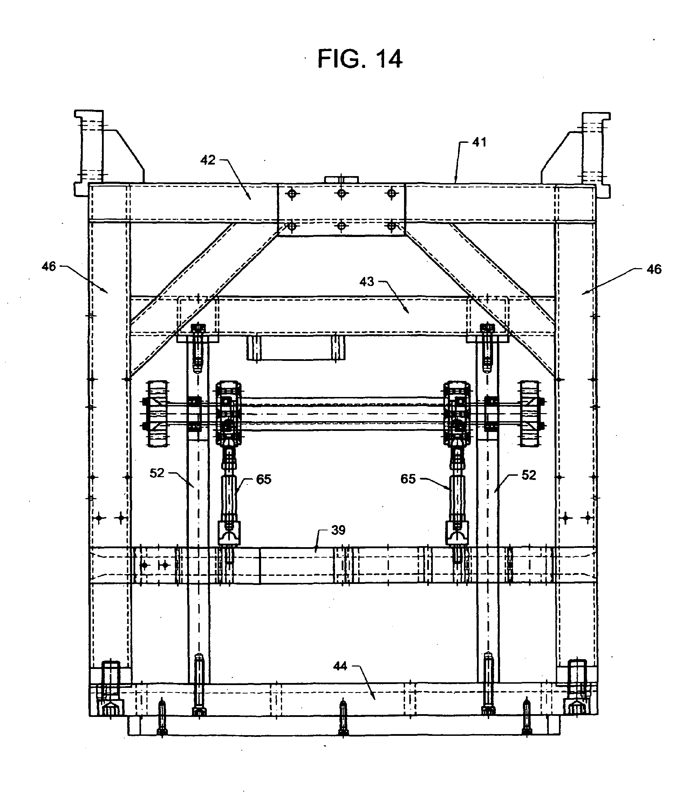

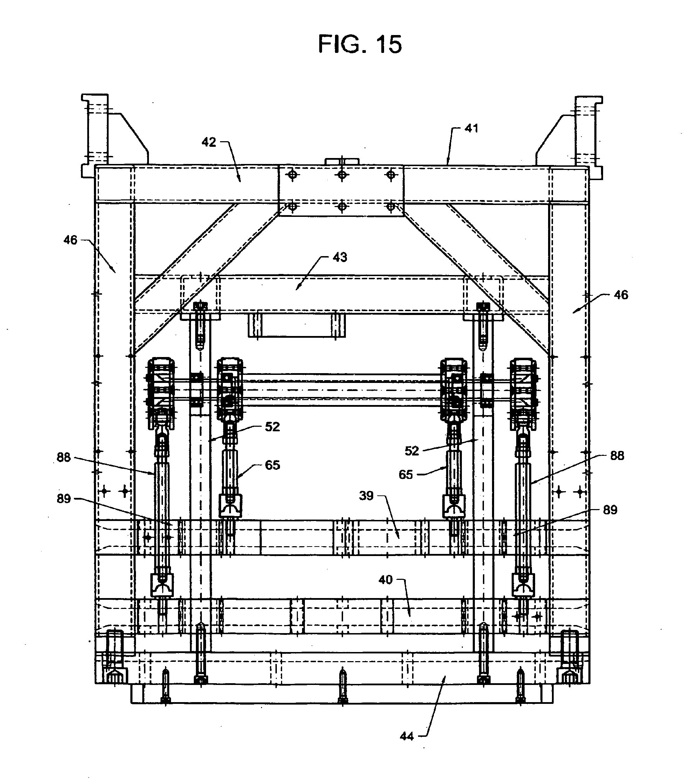

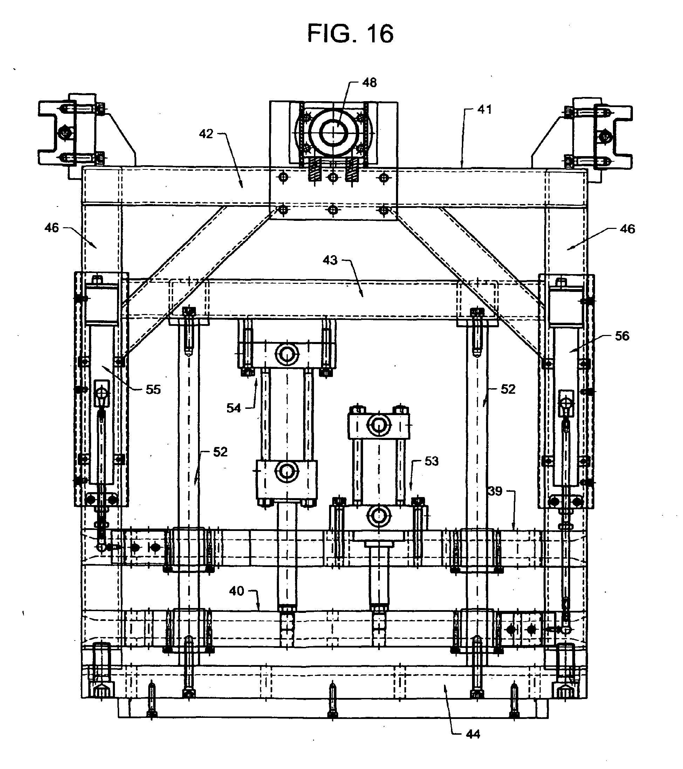

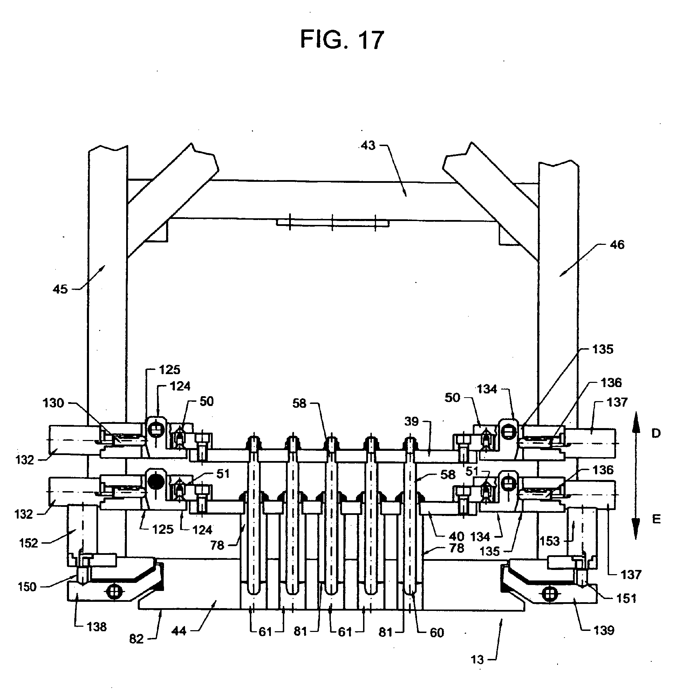

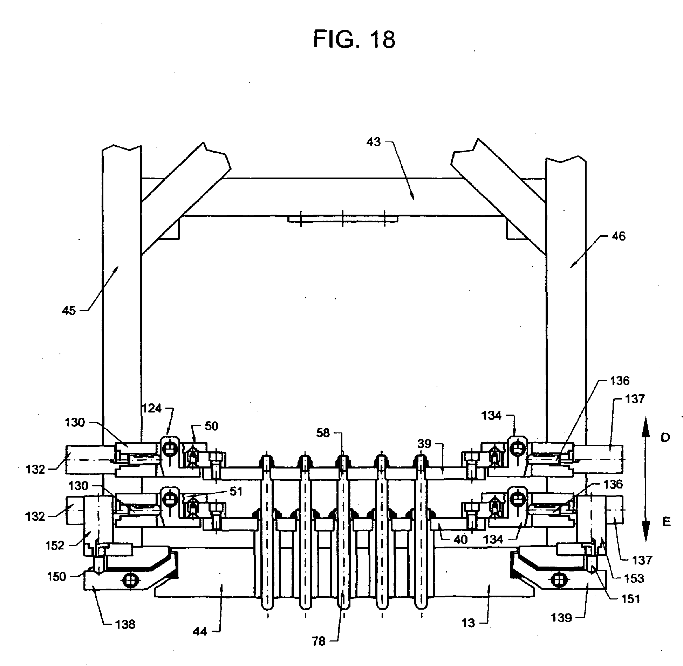

Now, coming back to examine the movable die 13, (see Figs. 5-18), it is noted that it is formed by a first and a second flat plate 39 and 40 arranged overlapped and spaced away to each other, which are supported on a metallic box-like support frame 41 constituted by a set of upper horizontal crosspieces 42 and intermediate horizontal crosspieces 43, arranged parallel to and spaced away from each other and delimited by a lower perforated plate 44, also parallel and spaced away with respect to the crosspieces 42 and 4, and all these components are joined reciprocally by a set of vertical stanchions 45 and 46. A nut screw 47 is fixed to one of the upper crosspieces 42 of the support frame 41, in the internal thread of which it is screwable and unscrewable the thread of a correspondent lengthened screw 48 with circulation of spheres, the end portions of which are supported by correspondent bearings secured adequately spaced away to each other to the upper crosspieces 17, and such screw is driven in rotation by a gearmotor 49 with included encoder, fixed to the left-hand end portion of the same upper crosspiece, and connected operatively in the control circuit of the plant according to the invention. In this way, the rotation of the screw 48 determined by the gearmotor 49 provides for the displacement of the nut screw 47, and therefore of the support frame 41 and the movable die 13, in either one of the two longitudinal advancement directions B and C opposite to each other, depending on the direction of rotation of the motorgear 49 and the screw 48. The maximum stroke of the movable die 13 is delimited by the proximity sensors 21 and 22 previously described, while the displacement amplitude of the nut screw 47 slidable along the screw 48, and therefore of the movable die 13, is adjusted by the encoder of the motorgear 49, which is connected operatively in the plant control circuit, and such displacement is controlled and managed by the operative program respectively set into this control circuit. In particular, in the fixing position of the mechanical proximity sensor 21 it is arranged an additional sensor of electronic type (not shown), connected operatively to the encoder and adapted to indicate the regulation position "0" (zero) of displacement of the movable die 13, in a manner that this latter may be operated by such control circuit to displace it automatically in the desired positions, depending on each operative program which has been set from time to time therein, and this for permitting the movable die 13 to arrange itself exactly in the central area of the boxes of each type and size which are employed and conveyed by the additional conveyor band 32.

The displacement amplitude to be effected by the movable die 13 is determined in advance for each type and size of box which has been employed, by measuring with the encoder both the length of the die maximum stroke, calculated from the one to the other one of the proximity sensors 21 and 22, and the longitudinal distance between the sensor of the "0" (zero) regulation position and the middle of the conveyor band 32, and storing these measures on coded form into the operative program being employed in the plant control circuit. Then, there are measured the widths of all the boxes which will be employed for filling the pressed peat therein, and such measures are also stored on coded form into said operative program, and from the difference between the width of each type of box which has been employed and the width of the conveyor band 32 it is calculated the distance existing between the left-hand edge of the same box and the "0" (zero) regulation position, and all the so defined distances are also stored on coded form into said operative program.

In this way, for each type and size of box which has been employed, the control circuit provides to control automatically from time to time the displacement amplitude which must be effected by the movable die 13 from the "0" (zero) regulation position to the position in which the box of each type and size is situated, so as to arrange such movable die exactly above all the width of the same box. The flat plates 39 and 40 are supported on the support frame 41 and are slidable separately and independently to each other in the same frame with a limited stroke in a vertical direction, in either one of the vertical directions D and E, and are secured laterally to correspondent upper movable support 50 and lower movable support 51, which are slidable along a set of vertical rods 52 also secured to the support frame 41. Each one of the flat plates 39 and 40 is secured to a pair of correspondent hydraulic cylinders 53 and 54, fixed in the support frame 41, which are connected in the plant hydraulic circuit and are actuated vertically and separately to each other by a proportional valve (not shown) controlled through the plant control circuit, thereby providing for the displacement of each flat plate from an upper end of stroke to a lower end of stroke, and vice versa. The displacement amplitude of each hydraulic cylinder 53 and 54, and therefore of the correspondent flat plate 39 and 40, is calculated by a relative linear encoder 55 and 56, fixed to the support frame 41, and each one of which is connected operatively in the electric control circuit of the present plant, and provides to control automatically through the relative proportional valve the displacement of each pair of cylinders and the relative plate, in the respective upper and lower adjustment positions which have been established from time to time, during each operative program respectively set in the same circuit, depending on each type and size of box to be filled with pressed peat. The upper flat plate 39 is provided with a plurality of through holes 57 distributed uniformly for the entire width of the same plate, on positions corresponding to those in which there are situated the box containers, and along all the through holes there are introduced corresponding rectilinear and lengthened impression signalling punches 58, which are identical to each other and have the same length, the upper end portions of which are secured by means of nuts 59 or the like to the plate 39, in a manner that such punches are all projected downwards.

These punches have correspondent lower round or sharpened shaped end portions 60, adapted to penetrate for an adjustable depth the peat being introduced into each container, in order to provide for corresponding cavities for housing the seeds of the relative cultivations.

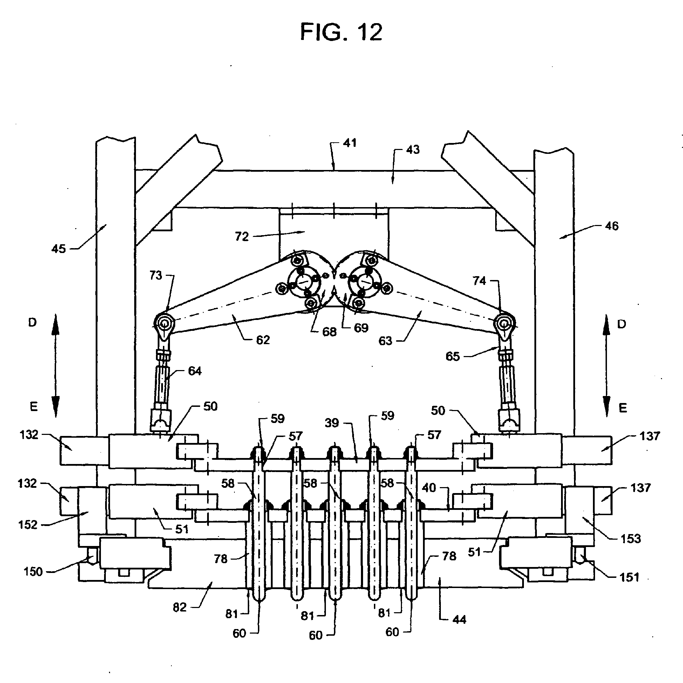

Furthermore, all the punches 58 are made with such a length as to be able to be inserted into corresponding through holes 61 provided through the lower perforated plate 44 of the support frame 41, for each vertical sliding position of the upper flat plate 39. In particular, when the upper flat plate 39 is displaced into its upper end of stroke position, shown in the Figs. 5, 9 and 17, the lower end portions 60 of all the punches 58 are partially introduced into the corresponding through holes 61 of the perforated lower plate 44, however without coming out from below of such through holes, under the condition in which the flat plate 44 is set for filling the peat in the manner which will be described, while when such upper flat plate 39 is displaced into its lower end of stroke position, shown in the Figs. 12, 13 and 18, the end portions 60 of all the punches 58 come out from below of the relative through holes 61 of the perforated lower plate 44, under the condition in which the containers are filled with pressed peat and such end portions penetrate the peat contained into the same containers, by forming corresponding cavities. During the actuation in the vertical direction of the upper flat plate 39 by means of the relative hydraulic cylinders 53, in order to avoid an undesired twist of this plate and keep it parallel to the lower plate 40 and the perforated lower plate 44, an anti-twist mechanism is provided which is formed by one or more pairs of movable arms 62, 63, 64 and 65, co-operating among them, of which the movable arms 63 and 64 are realized symmetrical to each other and with a relative enlarged shaped end portion 66 and 67, which are opposite to each other and secured to a correspondent gear 68 and 69, which are steadily meshing to each other and supported by a relative rotation axle 70 and 71 pivoted on a support box 72 fixed centrally under the intermediate crosspieces 43 of the support frame 41.

In turn, the relative other end portions 73 and 74 of such movable arms 62, 63 are realized with thin shape and pivoted on the upper end portion of correspondent additional pairs of movable arms 64 and 65, identical to each other and with adjustable length, the respective lower end portions 75 and 76 of which are pivoted on the correspondent upper movable supports 50.

The lower flat plate 40 is also provided with a plurality of through holes 77 distributed uniformly for the entire width of the same plate, in the same positions of the through holes 57 of the upper flat plate 39, and these holes 77 are all realized with a size larger than that of the preceding holes, in order to allow the introduction through them of correspondent lengthened extractor punches 78, having a length smaller than that of the punches 58 of the upper plate 39 and provided with relative through holes 79 for the introduction through them of the correspondent punches 58.

The upper end portions of these extractor punches 78 are secured to the lower plate 40 by means of nuts 80 or the like, in a way that such punches are all projected downwards.

These extractor punches have correspondent lower end portions 81 adequately shaped, adapted to form an abutment surface against which the peat to be introduced into the relative containers is compressed, as it will be described hereinafter. Also all the extractor punches 78 are realized with such length as to be able to be introduced into the correspondent through holes 61 of the lower perforated plate 44, for each vertical sliding position of the lower flat plate 40.

In particular, when the lower flat plate 40 is displaced into its upper end of stroke position, shown in the Figs. 5, 9 and 17, the lower end portions 81 of all the extractor punches 78 are partially introduced into the correspondent through holes 61 of the lower perforated plate 44, under the condition in which the flat plate 44 is set for being filled with the peat, which is compressed as it will be described into the cavities defined by the lower end portions 81 of the extractor punches 78 and the lower end portions 60 of the punches 58 of the upper flat plate 39, which are introduced into the correspondent through holes 79 of such extractor punches 78, while when such lower flat plate 40 is displaced into its lower end of stroke position, shown in the Figs. 12, 13 and 18, the lower end portions 81 of all the extractor punches 78 are arranged flushing with or projected beyond the lower flat surface 82 of the lower perforated plate 44, under the condition in which the containers are filled with peat, and the lower end portions 60 of the punches 58 are projected beyond this lower flat surface 82. Also such lower flat plate 40 is actuated by pairs of movable arms 83 and 84, identical to the previously described movable arms 62 and 63 and co-operating with relative gears 85 and 86 meshing steadily to each other, wherein such movable arms 83 and 84 are moved away laterally with respect to the preceding movable arms 62 and 63 and are also articulated with the upper end portions of additional pairs of movable arms 87 and 88, identical to each other and with a length larger than that of the preceding movable arms 64 and 65, and also moved away laterally from these latter, wherein also such additional movable arms 87 and 88 are articulated at the lower part with the correspondent lower movable supports 51 of the lower flat plate 40, by passing through respective through holes 89 provided through the upper movable supports 50.

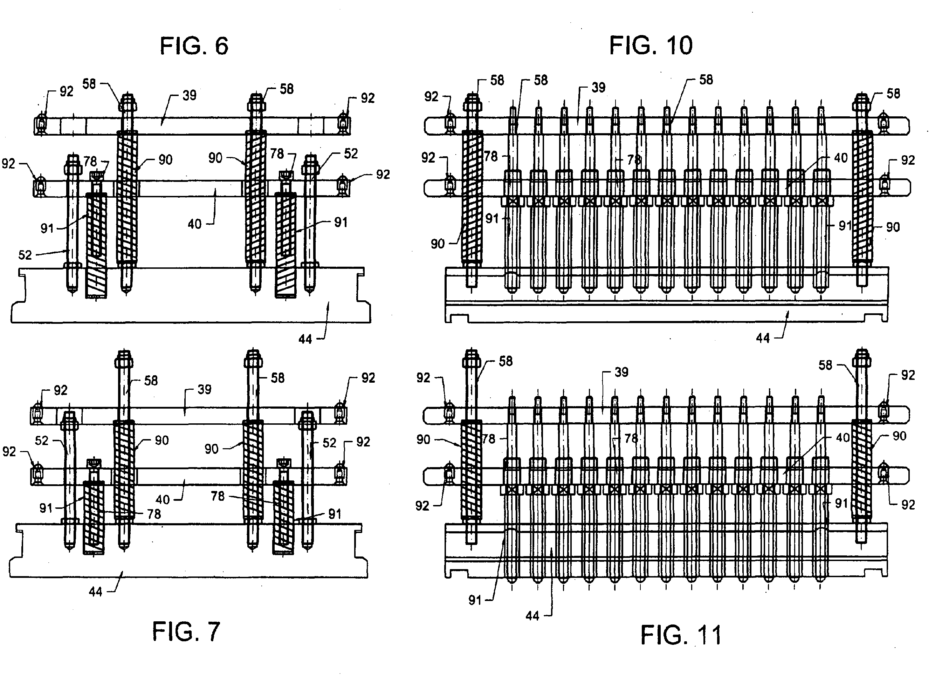

Figs. 6-11 schematically show the different components of the movable die 13, and the system for joining them reciprocally, wherein there are noted the different impression signalling punches 58 and the different extractor punches 78 which are wound by respective return springs 90 and 91, adapted to urge and return such punches and the associated flat plate 39 and 40 on the rest position, when the die is disassembled at the end of cycle. In particular, Figs. 6 and 10 show the punches 58 and 78 being urged by such return springs, with the plates 39 and 40 displaced in a determined position, while Figs. 7 and 11 show the punches 58 and 78 being urged in a different manner, with the plates 39 and 40 displaced into another position. Besides, in these Figures there are noted the systems for assembling and centering reciprocally the die plates 39 and 40, which are formed by the vertical rods 52 and a set of centering conical pins 92.

The so realized movable die may be assembled and disassembled easily and quickly, in the manner which will be described, with the possibility to replace easily and quickly the upper flat plate 39 and the lower flat plate 40, when additional upper and lower plates are required, having through holes with different numbers, shapes and arrangements, so as to fill containers with different types, shapes and sizes, by acting on to the movable supports 50 and 51 only, and not on the entire constructive structure of such die, as it occurs at present.

There are now described the additional conveyor band 32 and the relative L-shaped support structure 34 as well as the raising and lowering system of such conveyor band.

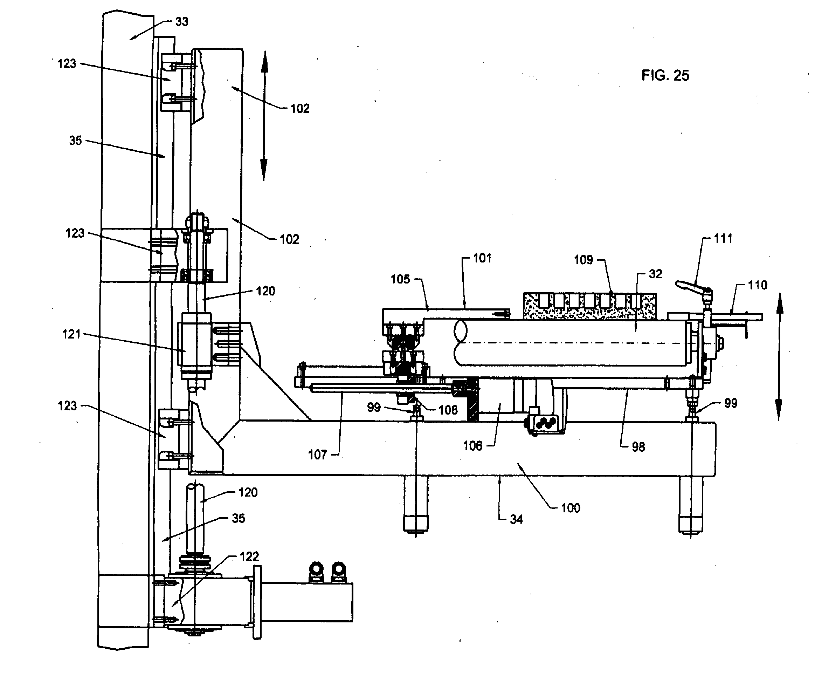

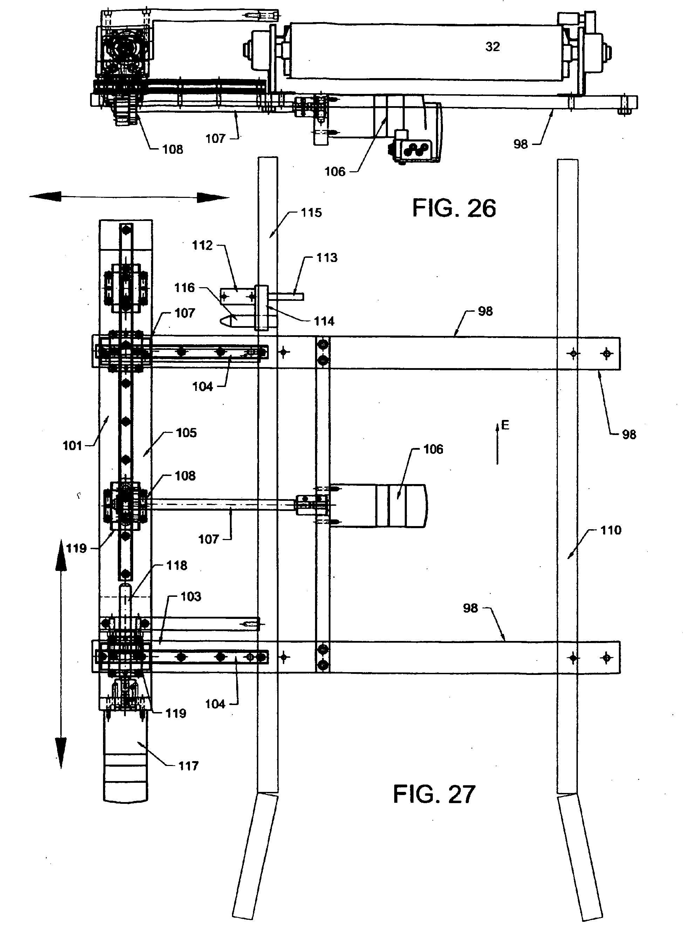

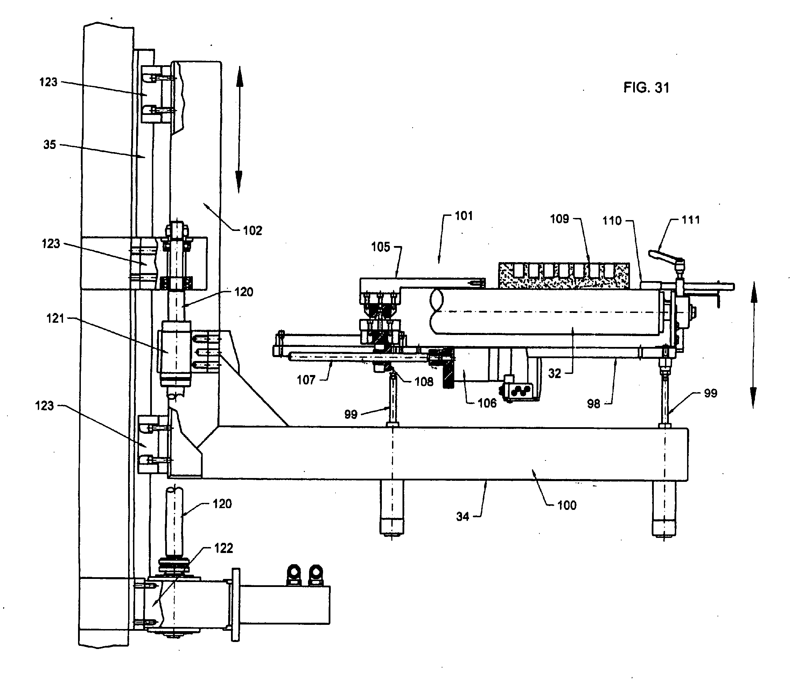

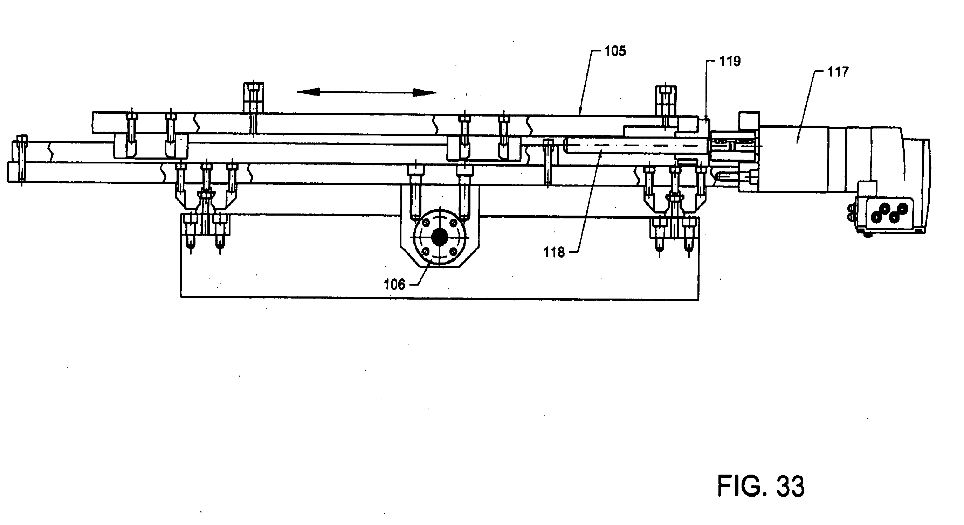

As visible particularly from Figs. 25-33, such conveyor band 32 is of rectangular shape and extends for almost all the width of the plant according to the invention, and is also wound about two correspondent rollers 93 and 94, driven in rotation in a single rotation direction E by a motorgear 95 at determinate cycle moments, in a way to provide for a correspondent advancement of the band in the same direction, so as to convey a box at a time from the loading area 96 on to the band of the box with the relative containers to be filled, to the unloading area 97 of the box with the filled containers. Such rollers 93 and 94 are pivoted on and supported by a support structure 98 made of sheet, situated on the one side of the band 32 and in turn supported by a set of lower pneumatic cylinders 99 or the like, in the example constituted by four cylinders identical to each other, which are fixed to the horizontal arms 100 of the L-shaped support structure 34.

These pneumatic cylinders 99 are provided with pressure regulator for calibrating their thrust force, and with quick discharge valves for producing a quick elastic dampening reaction and may be compressed downward of a limited value by some forces exerted on the overlying conveyor band 32, which might alter the sliding plane of such band, in a way that these cylinders produce an elastic reaction against such forces, which is sufficient to balance the same forces and bring back the band 32 into the correct sliding position. Such kind of situation might occur for example in the case in which a container wouldn't be arranged correctly on to the same band, by arranging itself in a manner to put obstacle to the filling operation, or the container would be arranged itself turned upside down, namely with its bottom turned toward the die, and also risking to damage the plant mechanical members during this operation. Moreover, such lower cylinders 99 also support another movable support structure 101 situated on the opposite side of the band 32 and turned toward the vertical arms 102 of the L-shaped support structure 34, which is shaped with saddles 103 sliding with a limited stroke along corresponding guide members 104 secured to the support structure 98, and joined with an upper plate 105 defining an abutment rectilinear edge situated laterally the conveyor band 32 and adaptable laterally against the same band, as well as actuatable in an alternate direction by an underlying regulation motor 106 with included encoder, and by a relative screw with circulation of spheres 107, engaging a correspondent screw nut with circulation of spheres 108 which is fixed to the movable support structure 101.

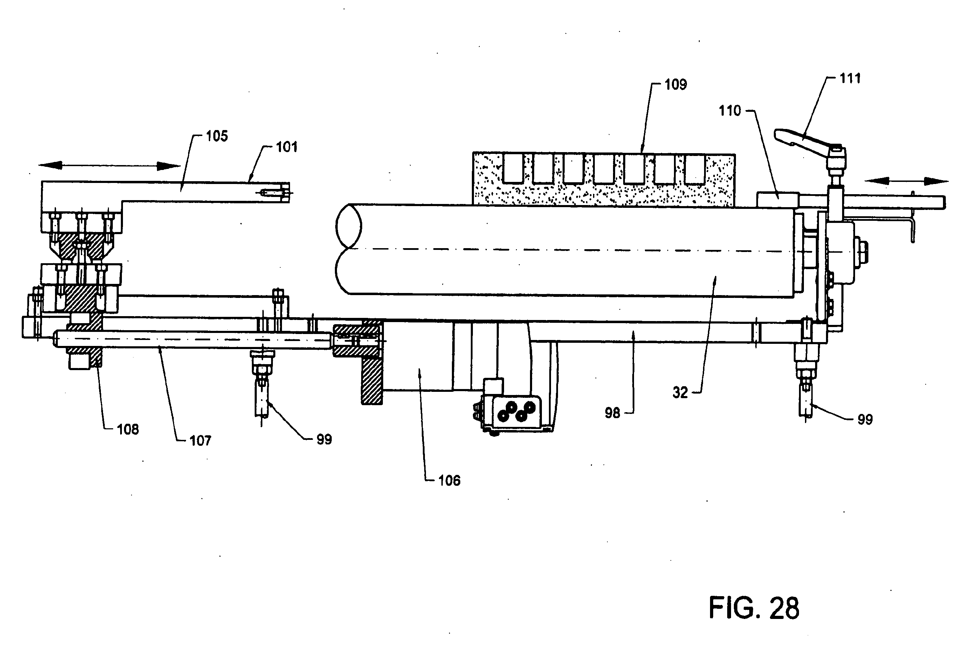

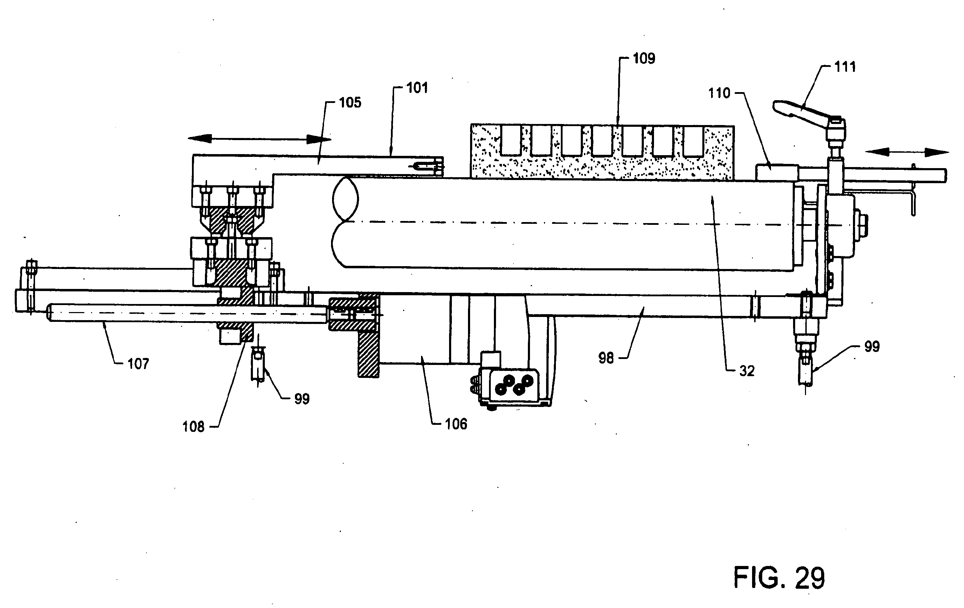

Such movable support structure 101 is displaced automatically into different width regulation positions, depending on the width of each box loaded on to the conveyor band 32, and is actuated from a rest position shown in the Figs. 28 and 30, in which such upper plate 105 is moved away laterally the opposite edge of the band 32, under the condition in which a box positioned on to the band 32 and conveyed by the same is not yet arrived in correspondence of the filling station 10, to a working position shown in the Figs. 25 and 29, in which such upper plate 105 is approached to the band 32 and a box is arrived in correspondence of the filling station 10, thereby guiding correctly the box (marked with 109) between the abutment edge 105 and an opposite abutment stationary guide member 110, situated in the opposite side of the band 32 and secured to the band structure, as well as displaceable in the requested regulation position by acting on to a relative regulation screw 111. As previously, also in this case the encoder is connected operatively in the plant electric control circuit and determines the displacement amplitude of the abutment edge 105, depending on the width of each box loaded on to the conveyor band 32, and such displacement produced by the motor 106 and the screw 107 is controlled and managed by the operative program respectively set into this control circuit. In particular, in the rest position of the abutment edge 105 are secured both a mechanical limit switch and a proximity sensor (both not indicated), also connected operatively in the plant electric control circuit, of which the limit switch is able to delimit the stroke of the same edge, by preventing with safety a possible extra-stroke thereof and stopping it automatically into this position, and the proximity sensor is able to detect the 0 (zero) sliding position of the abutment edge 105. In this way, depending on the width of each box loaded on to the conveyor band 32, the encoder provides for determining automatically from the 0 (zero) position the sliding amplitude which must be effected by the abutment edge 105, through the motor 106 and the screw 107, for displacing itself toward the band 32 and stopping it in such a position as to allow each box with this size to be conveyed on to the same band.

Furthermore, the regulation motor 106 might be also without encoder, and be regulated manually into the relative regulation positions by an associated handle (not shown).

Besides, such pneumatic cylinders 99 are supplied with such an air pressure level as to support effectively the boxes arranged on to the conveyor band 32 and to react elastically to some forces applied thereon, for the above specified reasons, and when such forces exceed a determinate intensity the air in the cylinders compresses itself, thereby providing for the displacement of the band 32. Moreover, a retainer cylinder 112 is provided in the filling station 10, which is provided with a rectilinear shank 113 adapted to stop temporarily the advancement movement of each box on to the band 32, and is fitted on to a support structure 114 fixed to a side guide member 115 of the same band, turned toward the abutment edge 105, and fixed to the support structure 98, said retainer cylinder being joined mechanically with a photoelectric cell 116 or similar sensor, situated upstream said cylinder in the advancement direction E of the band 32 and connected in the plant electric control circuit, together with the same cylinder and a regulation motor 117 with included encoder, supported by the abutment edge 105 and adapted to drive in rotation a screw with circulation of spheres 118 engaging corresponding nut screws with circulation of spheres 119 secured to the abutment edge 105. Such retainer cylinder 112 can so be displaced, through the motor 117, the screw 118 and the nut screws 119, into different regulation positions along the band 32, depending on the length of each box loaded on to the band and conveyed by the same.

The retainer cylinder 112 is adapted to displace the shank 113 from a retracted working position, in which it does not interfere with the box conveyed by the conveyor band 32, to an extracted position in which it interferes with such box, by stopping it temporarily in a position coincident with the movable die 13, when it is displaced into its working position, so as to fill with pressed peat the containers of this box. In particular, the retainer cylinder keeps initially the shank 113 into its extracted rest position. As soon as a box conveyed by the conveyor band 32 comes into abutment with the shank 113, the photoelectric cell 116 detects the presence of this box and provides for switching off the motorgear 95, with consequent advancement stop of the band 32, and arrangement of the box into its filling position, with subsequent displacement by the retainer cylinder 113 of the shank 113 into its retracted working position. As soon as the filling operation of the containers is ended within a pre-established time, the motorgear 95 is switched on again, with consequent advancement of the band 32 and the filled box toward the unloading area 97, and under this condition the photoelectric cell 116 does not more detect the presence of the box and through the retainer cylinder determines the displacement of the shank 113 into its extracted position, thereby setting the plant for filling the containers of a subsequent box.

Also the encoder of the motor 117 is connected operatively into the plant electric control circuit, and determines the amplitude of the length displacement of the abutment edge 105, depending on the length of each box loaded on to the conveyor band 32, and such displacement produced by the motor 117 and the screw 118 is controlled and managed by the operative program respectively set into this control circuit. In particular, in the rest position of the abutment edge 105, in which the retainer cylinder 112 is displaced for stopping the box having the shorter length, there are fixed both a mechanical limit switch and a proximity sensor (both not indicated), also connected operatively into the plant electric control circuit, of which the limit switch is able to delimit the longitudinal stroke of the same edge, by preventing with safety a possible extra-stroke thereof and stopping it automatically into this position, and the proximity sensor is able to detect the 0 (zero) sliding position in the longitudinal direction of the abutment edge 105.

In this way, depending on the length of each box loaded on to the conveyor band 32, the encoder provides for determining automatically from the 0 (zero) position the amplitude of the longitudinal sliding which the abutment edge 105 must effect, through the motor 117 and the screw 118, for displacing it along the band 32 up to such a position to allow to stop into this position of a box having this length, so as to allow to fill with pressed peat the containers of the same box.

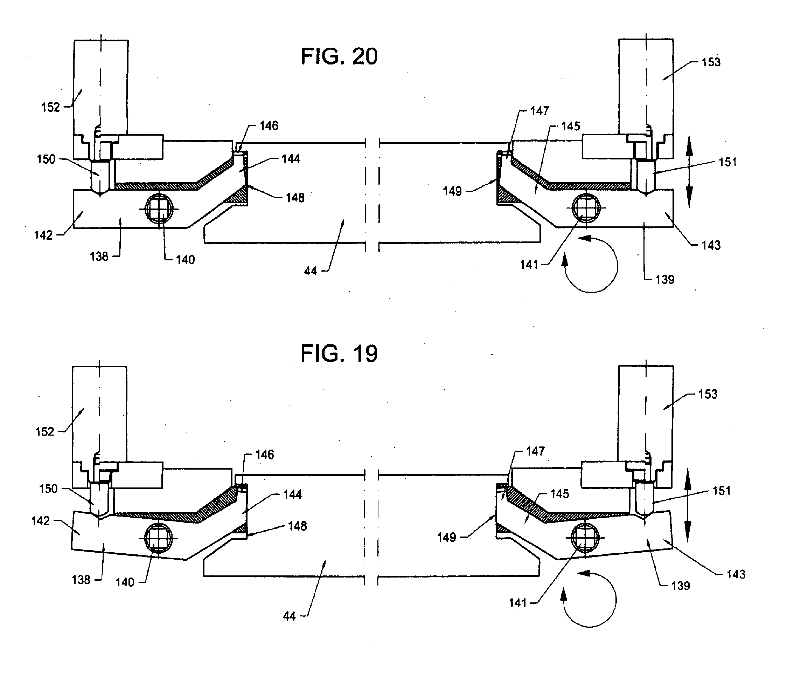

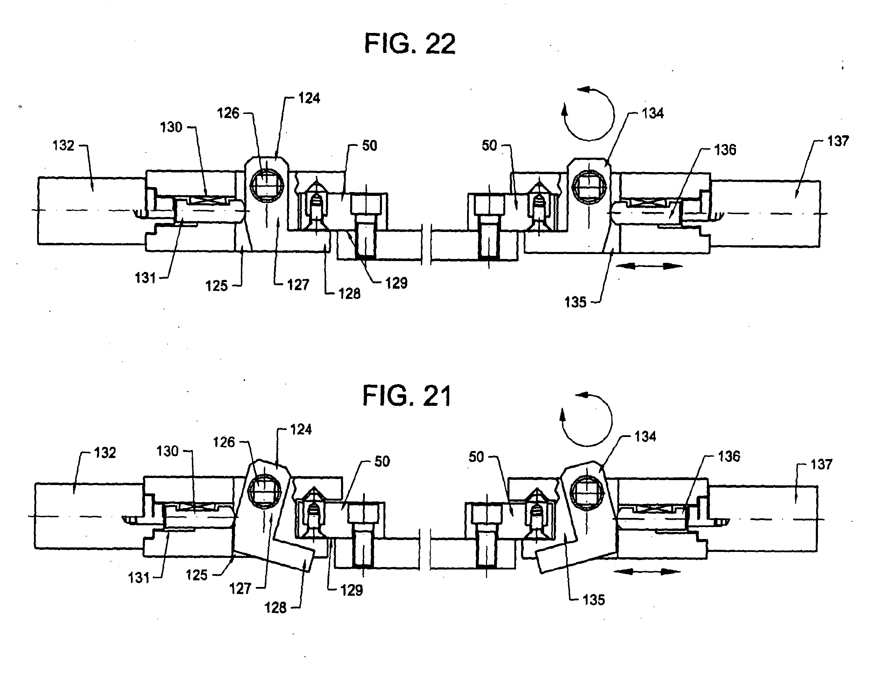

Also in this case, the motor 117 could not be provided with encoder and be regulated manually into the relative regulation positions by an associated handle (not shown). The raising and lowering movement of the conveyor band 32 is produced by a screw with circulation of spheres 120 having a vertical extent, secured on a central position to the front vertical stanchions 33 of the support structure 6 and engaging the correspondent inner thread of a nut screw with circulation of spheres 121, fixed to the vertical arms 102 of the L-shaped support structure 34, said screw being driven in rotation into its two rotation directions by a brushless motorgear 122 with included encoder, secured on the lower part of the support structure 6, in a manner that depending on the rotation direction of such screw the L-shaped support structure 34 is raised or lowered, from the one to the other one of its end of stroke positions, and that the vertical sliding of such L-shaped support structure takes place thanks to the engagement of sliding blocks 123 fixed to the vertical arms 102 of the L-shaped structure 34 along the correspondent vertical rectilinear guide members 35 and 36, secured to the vertical stanchions 33. Also the encoder of the motorgear 122 is connected operatively in the plant electric control circuit and determines the amplitude of the vertical sliding of the L-shaped structure 34, depending on the stroke which must be effected by such structure, in turn dependent from the height of each box loaded on to the conveyor band 32, and such sliding produced by the motorgear 122 and the screw 120 is controlled and managed by the operative program respectively set into this control circuit. In particular, in the lowered rest position of the L-shaped structure 34, there are secured both a mechanical limit switch and a proximity sensor (both not indicated), also connected operatively to the plant electric control circuit, of which the limit switch is able to delimit the vertical stroke of the same structure, by preventing with safety a possible extra-stroke thereof, and stopping it automatically into this position, and the proximity sensor is able to detect the 0 (zero) vertical sliding position of the L-shaped structure 34. In this way, depending on the height of each box loaded on to the conveyor band 32, the encoder provides for determining automatically from the 0 (zero) position the amplitude of the vertical stroke which the L-shaped structure 34 must effect, through the motorgear 122 and the screw 120, so as to raise such structure and the box up to the desired regulation position, in which such box arranges itself in a position approached to and underlying the movable die 13, which is displaced into its working position, so as to fill with the pressed peat the containers of such box. Figs. 19-22 show now some locking devices which are included into the movable die 13, and which act against the upper flat plate 39 and the lower flat plate 40 and the perforated flat plate 44, so as to determine the locking thereof when such movable die is displaced both in the rest and working position, and to determine the unlocking of these plates when the die is disassembled. Referring to the Figs. 21 and 22, in which the locking devices mounted on to the relative movable supports 50 and 51 are shown, and displaced respectively in the locking and unlocking position thereof, it is noted that such devices are constituted by a set of movable hooks 124 identical to each other, housed into a correspondent through opening 125 of the relative movable support 50 or 51 and formed by a square made of a milled sole piece, pivoted on a horizontal stud 126 and defining respective vertical shanks 127 and horizontal shanks 128, able to be disposed below the lower surface 129 of each flat plate. Each movable hook 124 is displaced by gravity into the rest position shown in the Fig. 21, in which the horizontal shanks 128 are rotated downward and moved away with respect to the lower surface 129 of the relative flat plate, therefore keeping this latter in the unlocked position.

Moreover, a rectilinear movable slider 130 is situated in correspondence of each movable hook 124, which slider is housed into a correspondent horizontal through hole 131 of the relative movable support 50 or 51, and operated to be displaced in the horizontal direction by a set of oleodynamic cylinders 132, contemporaneously to all the other movable sliders 130, from a retracted rest position, moved away with respect to the correspondent movable hook 124, under the condition in which such hook is disengaged from the relative flat plate (see Fig. 21), to an extracted working position into contact with respect to such movable hook, under the condition in which this movable hook is rotated about its stud 126, thereby engaging the relative flat plate from below (see Fig. 22), and therefore locking this latter in position. Likewise, from the other side of the plates 39 and 40 there are provided further movable hooks 134, identical and symmetrical with respect to the preceding ones, and housed into correspondent through openings 135 of the relative movable supports 50 or 51, and co-operating with relative movable sliders 136 identical and symmetrical with respect to the preceding ones, and also controlled to be displaced in the alternate rectilinear direction by correspondent oleodynamic cylinders 137, connected together with the preceding cylinders in the hydraulic circuit of the present plant.

During the operation of the movable die 13, all the hooks 124 and 134 are controlled at the same time to be displaced in the locking position of the plates 50 and 51. By referring now to the Figs. 19 and 20, in which the locking devices mounted on the lower plate 44 are shown, it is noted that also such devices are constituted by a set of movable hooks 138 and 139, identical and symmetrical to each other and having different shape with respect to the preceding hooks, which are mounted on the two sides of the lower plate 44 and articulated with a relative stud 140 and 141, together with the remaining hooks, on the lower part of the correspondent vertical stanchions 45 and 46.

The movable hooks 138 and 139 are formed by a square made of a sole milled piece defining respective horizontal shanks 142 and 143 and inclined shanks 144 and 145, of which each inclined shank is shaped upward by terminating with a correspondent rounded end portion 146 and 147, adapted to engage a respective side recess 148 and 149 of the front plate 44. Also these movable hooks 138 and 139 displace themselves by gravity into their rest position (see Fig. 19), in which they do not engage relative side recesses 148 and 149, thereby keeping the lower plate 44 unlocked. Moreover, the horizontal shanks 142 and 143 of these movable hooks are hollowed for permitting relative vertical movable sliders 150 and 151 to bear against them, which sliders are mounted on and actuated through correspondent oleodynamic cylinders 152 and 153 from a raised rest position (see Fig. 19), in which they do not engage such horizontal shanks, therefore urging the movable hooks into their unlocking position of the lower plate 44, to a lowered working position (see Fig. 20) in which they engage such horizontal shanks, and determining the rotation upward of the movable hooks and the correspondent engagement thereof with the respective side recesses of the lower plate 44, thereby providing for locking the same.

Also in this case, all the movable hooks 138 and 139 are operated contemporaneously to be displaced in the locking or unlocking position of the lower plate 44, together with the above described movable hooks 124 and 134.

With particular reference to the Figs. 34-39, described therein are now the different operative steps of the filling plant according to the present invention.

In the starting position of Fig. 34, it is noted that the box-like container 11 and the movable die 13 are disposed in their rest position, in which such box-like container is displaced fully rightward, while the movable die is situated centrally over the open chamber 28 of the compression box 29, and all the impression signalling punches 58 and all the extractor punches 78 are raised, so as to form correspondent cavities in the underlying perforated lower plate 44, which cavities are all filled with peat in a previous step, in the manner which will be described. Besides, under this condition, the hydraulic cylinder 31 is displaced in the vertical direction into its fully raised position, determined by a pressure sensor secured to the thrust oleodynamic pipeline and connected in the plant electric control circuit, in a manner that such cylinder compresses the volume of peat introduced into all the cavities defined by said punches 58 and 78.

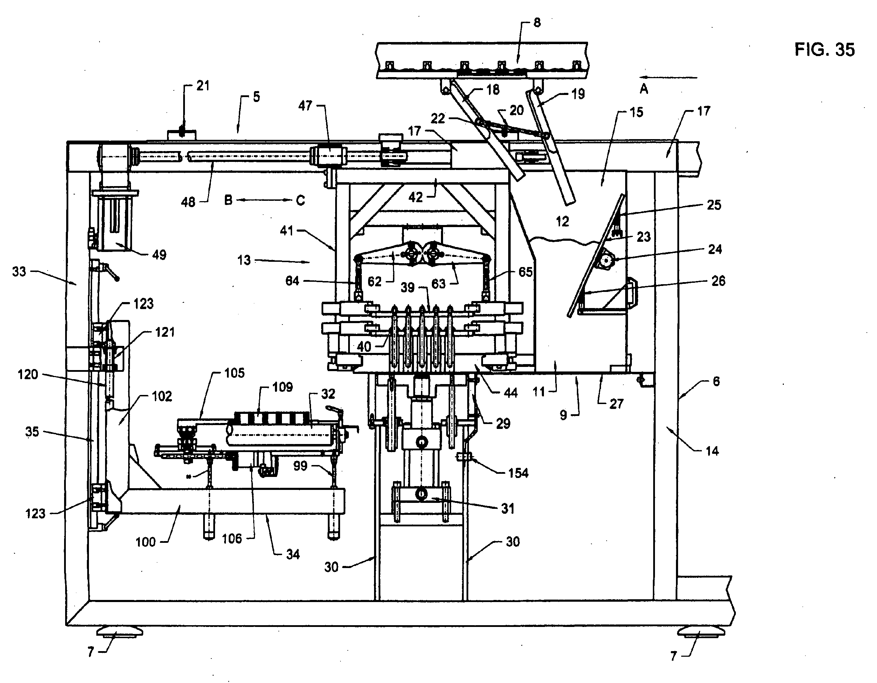

In turn, the conveyor band 32 is controlled by the plant operative program to be displaced into its lowered rest position and set for being actuated, through the motorgear 122 and the screw 120, into its raised working position with a maximal stroke depending on the height of the box which has been employed from time to time, while the abutment edge 105 is displaced into its rest position and set for being actuated, respectively through the motor 106 and the screw 107 and the motor 117 and the screw 118, in the working position with a width and a length correspondent to those of the box which has been employed from time to time. Under this condition, on to the loading area of such band a box with the relative containers is disposed, which is coming from the de-stacking device (not shown), and the band 32 is actuated by the relative motorgear 95, so as to displace the box 109 progressively toward the filling station 10, in the advancement direction of the same band, while the additional support structure 101 and the abutment edge 105 are displaced into their working position. In the subsequent operative position (see Fig. 35), in which the box 109 with the containers is arrived into the filling station 10, and stops itself against the extracted shank 113, such position is detected by the photoelectric cell 116 which therefore provides for switching off the motorgear 95, and therefore also the conveyor band 32, by setting the same box for being filled with peat in the subsequent steps. Furthermore, in the subsequent step shown in the Fig. 36, while the conveyor band 32 and the box 109 remain always stopped in the same position, the movable die 13 is operated to be displaced in the direction B, through the screw 48 driven in rotation by the motorgear 49, from its initial rest position of Fig. 34 to its working position of Fig. 36, with a stroke controlled by the machine operative program and depending on the size of the box which has been employed, in which such movable die 13 stops itself in the centred position with respect to the underlying box, and in which the rotation of the motorgear 49 and the screw 48 is stopped.

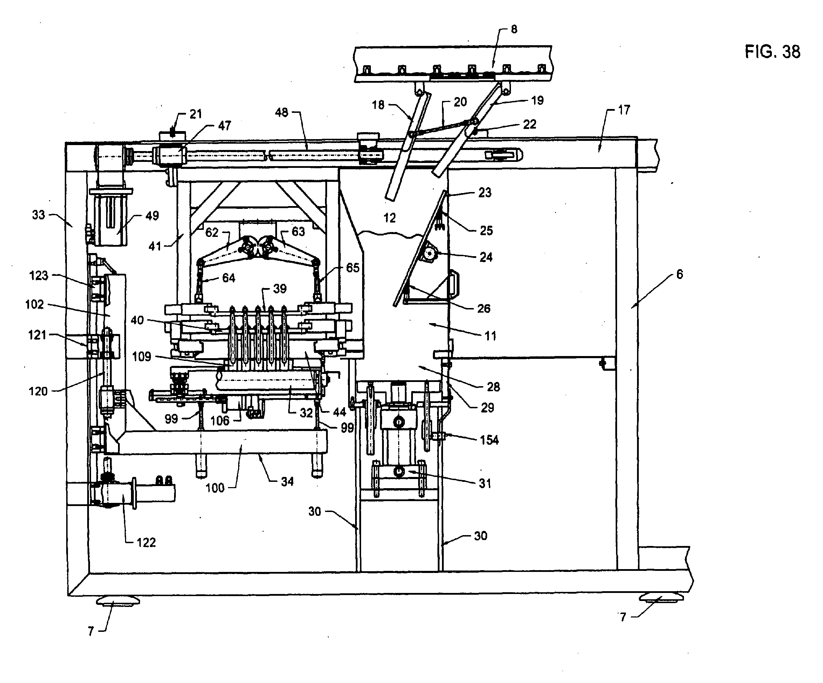

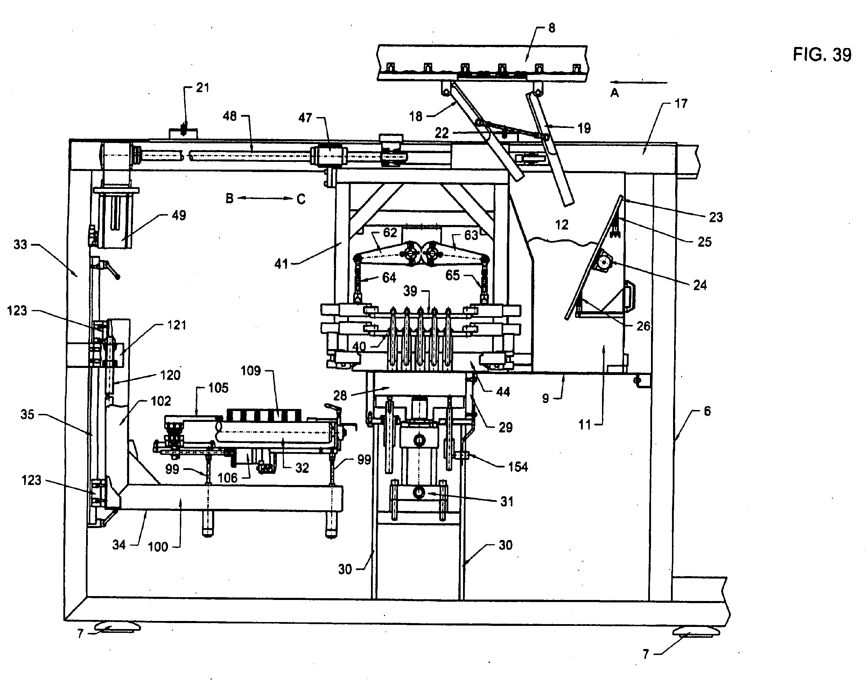

Under this condition, the movable die 13 is displaced exactly over the box 109 with the containers, and the box-like container 11 is displaced exactly over the open chamber 28 of the compression box 29, while the hydraulic cylinder 31 is operated to be displaced downward, up to a fully lowered position defined by an end of stroke sensor 154, shown in the same Fig. 36, and connected in the plant electric control circuit and calibrated in advance to provide for filling the open chamber 28 with an established quantity of peat, sufficient to fill all the cavities of the movable die 13 in the subsequent steps. In this way, such open chamber 28 is completely filled with the peat contained into the box-like container 11. In the subsequent step shown in the Fig. 37, it is noted that the conveyor band 32, the movable die 13 and the box-like container 11 are kept always stopped in the same position and the box 109 locked into this filling position, while the motorgear 122 of the L-shaped support structure 34 is actuated, and the consequent rotation of the screw 120 provides for lifting the entire L-shaped support structure 34 and the conveyor band 32 with the stroke established by the set operative program based on the box sizes, and under this condition also the box with the containers is lifted, by arranging itself against the lower surface 82 of the perforated lower plate 44 of the movable die 13. In the subsequent step shown in the Fig. 38, in which all the described component parts remain in the so attained positions, it is noted that all the impression signalling punches 58 and all the extractor punches 78 are lowered, thereby causing the pressed peat to come out from the relative cavities of the perforated plate 44 and providing for conveying it into the correspondent containers, and also forming with the end portions 60 of the punches 58 correspondent surface cavities in the peat conveyed into each container, for the subsequent deposit of the requested seeds into the same cavities. In the cycle end step shown in the Fig. 39, it is noted that the motorgear 122 and the relative screw 120 are driven in rotation in a reverse direction, thereby displacing the L-shaped support structure 34 and the box into the lowered position up to the lower rest position, based on the set operative program, in which the assembly support structure - conveyor band is stopped, and under this condition the retainer cylinder 112 displaces the shank 113 to the retracted position, so as to unlock the box, while the motorgear 95 is driven again, with consequent further advancement of the conveyor band 32 with the relative box 109 up to the unloading station 97, in which such conveyor band 32 is stopped again, and the box 109 with the containers filled with peat is unloaded, so as to set the conveyor band 32 for loading another box and for performing a subsequent cycle in the same manner.

Contemporaneously to this, the movable die 13 and the box-like container 11 are displaced with a reverse movement in the direction C by the motorgear 49 and the screw 48, up to they arrive into the loading station 9 on the die rest position, defined by the set operative program, with consequent stop of the movement of these components, under the condition in which the movable die 13 returns over the open chamber 28 of the compression box 29 and the box-like container 11 is fully displaced rightward again, and the displacement of the movable die 13 determines the levelling of the peat contained into such open chamber 28, while the die is returned again in the position in which its upper plate 39 and lower plate 40 are lifted again, so as to set the perforated lower plate 44 for filling its cavities with peat. Then, the operative step of Fig. 34 is repeated, by actuating the hydraulic cylinder 31 to its fully raised position, controlled by the relative pressure sensor, with consequent compression of the peat from the open chamber 28 into the cavities of the perforated lower plate 44 and performance of a subsequent cycle in the same manner.

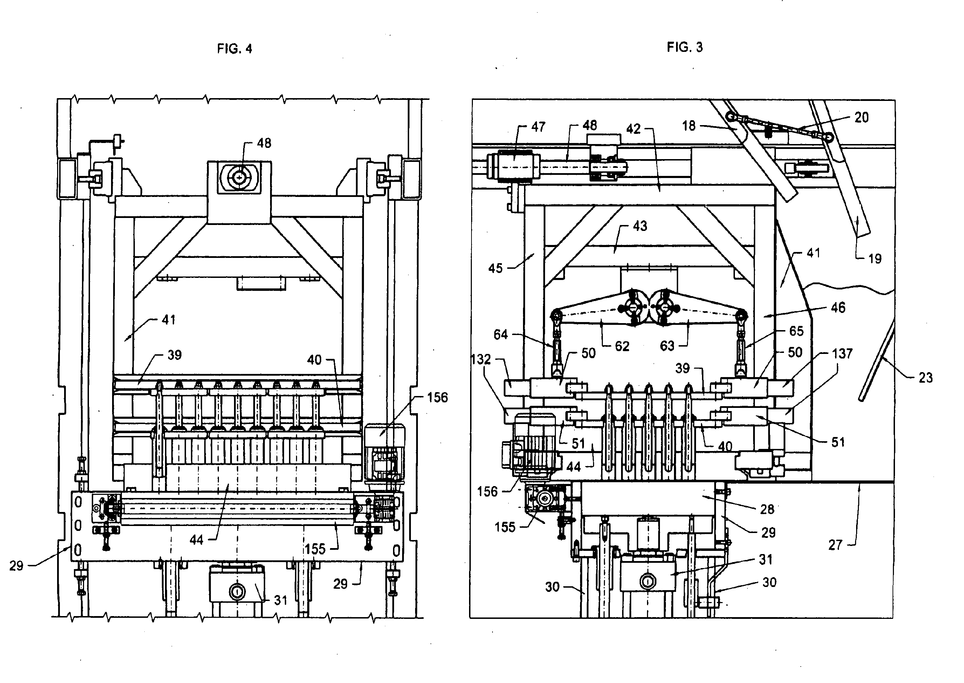

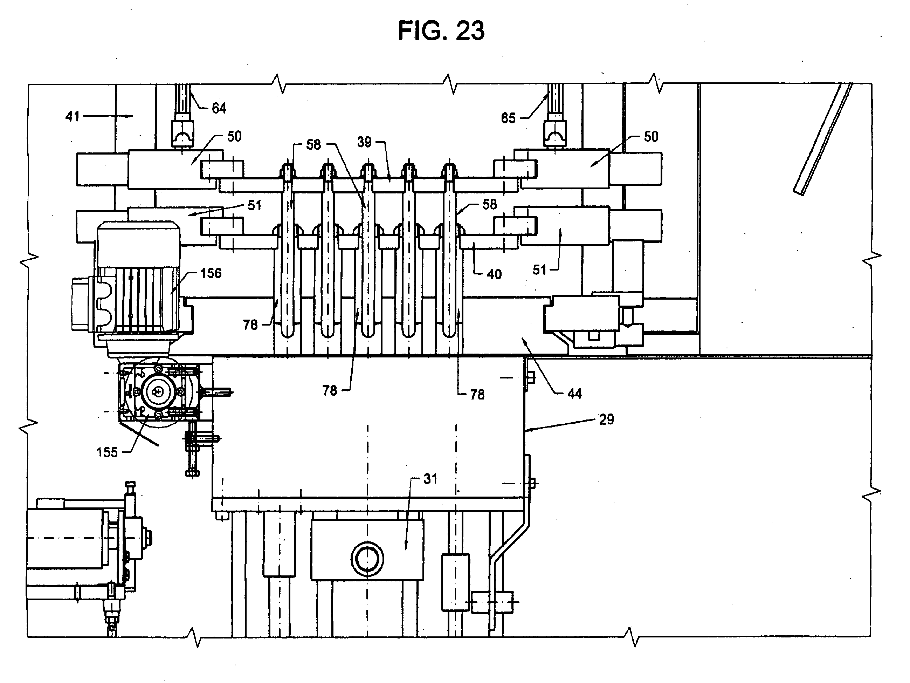

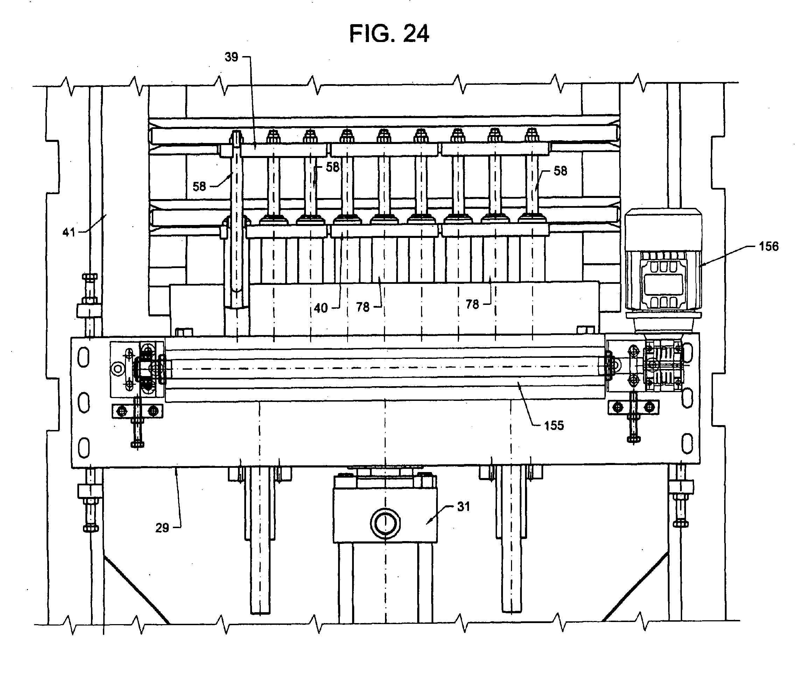

Finally, by referring now to the Figs. 3, 4, 23 and 24, shown therein is another component of the present plant, constituted by a double-screwing rotating brush 155, secured to the wall of the compression box 29, at the lower part of the support frame 41, below the perforated plate 44, and driven in rotation by a relative electric motor 156, fixed to such support frame and connected in the plant electric control circuit. The scope of this rotating brush 155 is that to clean the movable die lower surface at the end of each step of introduction of the pressed peat into the cavities of such perforated plate 44, so as to remove particles in excess of the same peat and to discharge them from the plant lower part, thereby permitting the containers to be subsequently filled effectively and without problems.

The so realized plant allows automatic and continuous working cycles without manual interventions to be performed, by ensuring an effective protection against possible damages of its component parts thanks to the presence of the pneumatic cylinders 99, made and operating as specified above, and also permitting to assemble and disassemble quickly and easily the movable die 13, for repair, maintenance and substitution operations of the die with further dies for boxes having different sizes and shapes, and for cultivations of different kind, by ensuring also a high productivity and a better working flexibility of the same plant.

## Claims

1. Plant for filling automatically pressed peat or the like into containers for cultivations of plants and vegetables of various kind, such as flowers and plants for vegetable, flower and nursery cultivations, wherein the containers are provided into boxes of different types, shapes and sizes, the plant comprising a box-like shaped metallic support structure, laid on to the floor and supporting conveyor means with unidirectional advancement, driven by first powered means and which can be filled with peat or the like conveyed in a per se known manner, said support structure defining a loading station and a filling station, able respectively to introduce in the plant the peat loaded on to said conveyor means and conveyed by the same, and to fill with pressed peat or the like said containers, the plant also comprising peat containing means (box-like container) able to collect the peat conveyed by said conveyor band, and pressing means (movable die) driven by second powered means, and able to receive temporarily the pressed peat and to introduce it into said containers, and which can be displaced from a rest position to a working position, and vice versa, respectively for receiving temporarily the peat contained into said containing means and for filling with pressed peat the containers, and comprising also additional conveyor means arranged preferably in an orthogonal direction with respect to said conveyor means and driven by third powered means for conveying selectively the boxes with the containers, which are loaded thereon by de-stacking means, at first in correspondence of the filling station, in which the containers are filled with peat pressed by said pressing means displaced into their working position, and then in correspondence of the unloading area of the same boxes, in which the boxes with the filled containers are drawn for being delivered to destination, **characterized in that** said pressing means (13) comprise, mounted in a support frame (41) secured to said support structure (6), first and second movable means (39, 58 ; 40, 78) co-operating with third stationary means (44), defining a plurality of cavities (61) adapted to be filled temporarily with pressed peat or the like, and distributed with an arrangement corresponding to that of the containers of each box (109), said first and second movable means (39, 58 ; 40, 78) being displaceable separately by correspondent actuation means (hydraulic cylinders 53, 54) associated with distance measuring means (55, 56), from a raised to a lowered position, and vice versa, respectively for filling temporarily with pressed peat said cavities (61), when said pressing means (13) are displaced into their rest position, and for letting the pressed peat to come out from said cavities (61) and to be conveyed into said containers, when said pressing means (13) are displaced into their working position, said pressing means (13) also comprising anti-twist means (62, 63, 64, 65 ; 83, 84, 87, 88) able to prevent some twists of said first and second movable means (39, 58 ; 40, 78), by keeping them always parallel to each other, during the vertical sliding of the same ; also **characterized by** compression means (31) actuating a box (29), delimiting at least an open chamber (28) with variable volume which can be filled with peat or the like, coming from said box-like container (11), and co-operating with said pressing means (13), when these latter are displaced into their rest position, said compression means (31) being displaceable from a raised position in which the peat introduced into said open chamber (28) is compressed against said cavities (61), to a lowered position for filling said open chamber (28) with further peat, when said pressing means (13) are displaced into their working position, and vice versa, and also **characterized in that** said additional conveyor means (32) are constituted by a support structure (98) co-operating with a movable support structure (101, 105), which are supported through elastic means (99) by support means (34) slidable in the alternate vertical direction along said support structure (6), and which can be driven by fourth powered means (120, 122), from a lowered position to a lifted position, and vice versa, in which said additional conveyor means (32) are respectively moved away and approached with respect to said pressing means (13), when these latter are displaced into their working position, said additional movable support structure (101, 105) being operated by fifth and sixth powered means (106, 107 ; 117, 118) to be displaced into different width and length regulation positions, depending on the size of the box respectively loaded on to said additional conveyor means (32), said additional conveyor means (32) being also associated with control means (112, 113), able to prevent temporarily the advancement of said additional conveyor means (32) and a box in a position below said pressing means (13) displaced into their working position, for filling with pressed peat said containers, and able to allow such an advancement of said additional conveyor means (32) and the box with the filled containers, and finally **characterized in that** said second, fourth, fifth and sixth powered means (48, 49 ; 120, 122 ; 106, 107 ; 117, 118) are operated automatically by the operative program respectively set, and associated with distance measuring means, in a manner that to provide for the displacement into positions established in advance of the correspondent said pressing means (13), said support means (34) and said movable support structure (101, 105), depending on the size of each box which has been employed.

2. Plant according to claim 1, **characterized in that** said box-like container (11) is perforated on its lower wall (27), to permit the passage of the peat contained therein, and is also provided with at least a rectilinear and inclined plane (23), actuated with rapid vibratory movements by per se known vibratory means (24), during the filling of peat into the collecting chamber (12) defined into the same box-like container, in order to make easier the sliding downward of the peat along the walls of said box-like container (11), and **characterized** also by level sensor means able to detect respectively a maximum and a minimum filling level of the peat into said collecting chamber (12), and to operate said first powered means to allow the advancement of said conveyor means (8) when a minimum filling level into said box-like container (11) is attained, in order to load further quantities of peat into said collecting chamber (12), and to prevent the advancement of said conveyor means (8) when a maximum filling level of peat into said box-like container (11) is attained.

3. Plant according to claim 2, **characterized in that** said first and second movable means comprise respectively a first upper flat plate (39) and a second lower flat plate (40), disposed overlapped and spaced away to each other, which are supported by correspondent movable supports (50, 51) on a metallic support frame (41), joined to said box-like container (11), which is situated laterally said first and second flat plate (39, 40), on a position comprised between these latter and the rear side of said plant support structure (6), said first and second flat plate (39, 40) being slidable separately and independently to each other from the lowered to the raised position thereof, and vice versa, along said support frame (41), into positions established by said distance measuring means (linear encoders 55, 56), based on the operative program respectively set.

4. Plant according to claim 3, **characterized in that** said third stationary means comprise a perforated lower plate (44), parallel to and spaced away from said first and second plate (39, 40) and secured to said support frame (41).

5. Plant according to claim 4, **characterized in that** said second powered means for actuating said first and second plate (39, 40) and said perforated lower plate (44) are constituted by a nut screw (47) secured on the upper part of said support frame (41), and by a screw with circulation of spheres (48) which can be screwed and unscrewed into the correspondent inner thread of said nut screw (47) and driven in rotation by at least a motorgear (49) associated with said distance measuring means (encoder), in a way to displace in the alternate longitudinal direction the assembly formed by said first and second plate (39, 40) and said perforated lower plate (44), with a stroke of the length delimited by first and second mechanical sensor means (21, 22), and measured by said distance measuring means (encoder), starting from proximity sensor means situated in the position of said first mechanical sensor means (21) and able to indicate the 0 (zero) regulation position, from the rest position situated above said open chamber (28) of said compression means (31), to the working position situated above said additional conveyor means (32), in which said box-like container (11) is displaced above said open chamber (28) and fills it with peat, and vice versa.

6. Plant according to claim 4, **characterized in that** said first upper plate (39) is provided with a plurality of through holes (57) distributed uniformly for the entire width of the same plate, on positions correspondent to those of arrangement of said containers, and along all said through holes (57) there are inserted correspondent lengthened impression signalling punches (58), identical to each other and having the same length, which are fixed on the upper part with said first plate (39) and projected downward with their lower end portions (60), adapted to penetrate for an adjustable depth into the pressed peat being introduced into each container, in order to provide for correspondent cavities for housing the seeds of the respective cultivations, and **characterized in that** said second lower plate (40) is also provided with a plurality of through holes (77) distributed uniformly for the entire width of the same plate, in the same positions of the through holes (57) of said first plate (39), said through holes (77) being all realized with a size larger than that of the preceding through holes, in order to allow the introduction through them of correspondent lengthened extractor punches (78), having a length smaller than that of said punches (58), and provided with relative through holes (79) for the insertion through them of the correspondent punches (58), said extractor punches (78) being secured on the upper part to said second plate (40) and being provided with lower end portions (81) of shaped form, adapted to form an abutment surface against which the peat to be introduced into said containers is compressed, said extractor punches (78) being able to be inserted into the correspondent through holes (61) of said perforated lower plate (44) for each vertical sliding position of said second plate (40).

7. Plant according to claim 6, **characterized in that** said anti-twist means are constituted by at least a pair of first movable arms (62, 63, 64, 65) co-operating with said first upper plate (39), and at least a pair of second movable arms (83, 84, 87, 88) co-operating with said second lower plate (40), of which said first movable arms (62, 63) are realized symmetrical to each other and shaped with a relative enlarged formed end portion (66, 67), which are opposite to each other and fixed to a correspondent gear (68, 69), which are steadily meshing to each other and pivoted on a support box (72) secured to said support frame (41), said first movable arms (62, 63) being realized with other thin shaped end portions, which are pivoted on the upper part with correspondent additional first movable arms (64, 65), identical to each other and having limited length, and pivoted on the lower part with said movable supports (50), and of which said second movable arms (83, 84) are identical to said first movable arms (62, 63) and co-operating with the relative gears (85, 86) meshing steadily to each other, said second movable arms (83, 84) being moved away laterally with respect to said first movable arms (62, 63) and articulated on the upper part with correspondent additional second movable arms (87, 88), identical to each other and having a length larger than that of said additional first movable arms (64, 65) and also moved away laterally from these latter, wherein said additional second movable arms (87, 88) are pivoted on the lower part with said movable supports (51), by passing through respective through holes (89) provided through said movable supports (50).

8. Plant according to claim 7, **characterized in that** said first and second plate (39, 40) may be assembled and disassembled from the relative movable supports (50, 51) for repair and maintenance and substitution operations of the die with further dies, of different shapes, sizes and types.

9. Plant according to claim 7, **characterized in that** said first and second plate (39, 40) are associated with correspondent first locking means (124, 134), and said lower plate (44) is associated with correspondent second locking means (138, 139), which are able to lock the same plates both in the rest and working position of said pressing means (13), for filling with peat the relative cavities (61) of said perforated lower plate (44), and are able to unlock the same plates when the die is disassembled.

10. Plant according to claim 9, **characterized in that** said first locking means comprise correspondent movable hooks (124, 134) identical to each other and housed into respective through openings (125, 135) of said movable supports (50, 51), and shaped for engaging or not engaging the correspondent plate (39, 40), through a relative movable slider (130, 136) housed into a correspondent horizontal through hole (131) of the relative movable supports (50, 51) and displaceable from a locking to an unlocking position, and vice versa, through control means (oleodynamic cylinders 132, 137), and **characterized in that** said second locking means also comprise correspondent movable hooks (138, 139) identical and symmetrical to each other and with different shape than the other movable hooks (124, 134), which are mounted on to said support frame (41) laterally to said perforated lower plate (44) and are displaceable by control means (oleodynamic cylinders 152) in a manner to engage and disengage the same plate.

11. Plant according to claim 5, **characterized in that** said open chamber (28) is provided on the upper part of a compression box (29), actuated in the vertical direction by said compression means (31) into said support structure (6), with a stroke delimited on the upper part by sensor means and on the lower part by end of stroke sensor means (154), calibrated in advance for determining the filling of the open chamber (28) with an established quantity of peat, sufficient to fill all the cavities (57) of said perforated lower plate (44), said open chamber (28) being displaceable from a lowered position, in which it can be filled with the peat contained into said box-like container (11), when it is displaced above the same chamber, on the working position of said pressing means (13), to a raised position in which it is compressed against the lower surface (78) of said perforated lower plate (44), by filling with peat said cavities (57), when said pressing means (13) are displaced on to the rest position thereof.

12. Plant according to claim 1, **characterized in that** said support means (34) are constituted by a L-shaped metallic support structure formed by horizontal arms (100) and vertical arms (102), to which some sliding blocks (123) are secured, which are sliding in the vertical direction along correspondent vertical guide members (35, 36) fixed to said support structure (6).

13. Plant according to claim 12, **characterized in that** said fourth powered means comprise a lengthened screw with circulation of spheres (120) having vertical extent, secured on the central position to the front side of said support structure (6) and engaging correspondent nut screws with circulation of spheres (121) fixed to said vertical arms (102), and also comprise a brushless motorgear (122) including said distance measuring means (encoder) and fixed on the lower part of said support structure (6) as well as driving in rotation said screw (12) in its two directions of rotation, so as to provide for lowering and lifting, and vice versa, said additional conveyor means (32), wherein the stroke of said support structure (34) is delimited on the lower part by mechanical sensor means, situated in the lowered rest position of the same structure, together with proximity sensor means able to indicate the 0 (zero) regulation position, and the raised working position of said support structure (34) and said additional conveyor means (32) is determined by said distance measuring means (encoder), by starting from said proximity sensor means and based on the operative program respectively set, and depending on the height of the box disposed on to said additional conveyor means (32).

14. Plant according to claim 13, **characterized in that** said movable support structure (101) is situated near said vertical arms (102) and is shaped with saddles (103), sliding along correspondent guide members (104) secured to said support structure (98), and joined to an upper plate (105) defining a side abutment edge, adaptable against said additional conveyor means (32) as well as driven in an alternate direction by fifth powered means (106, 107), into different width regulation positions, depending on the width of each box loaded on to said additional conveyor means (32).

15. Plant according to claim 14, **characterized in that** said fifth powered means comprise a regulation motor (106) including said distance measuring means (encoder), and a screw with circulation of spheres (107) driven by said regulation motor (106) and engaging a nut screw with circulation of spheres (108) secured to said movable support structure (101), in a way that said abutment edge (105) can be displaced from a rest position, in which there are fixed both a mechanical limit switch, able to delimit the stroke, and proximity sensor means able to indicate the 0 (zero) regulation position, to different working positions toward said additional conveyor means (32), depending on the width of each box loaded on to said additional conveyor means (32), wherein the stroke length is measured by said distance measuring means, starting from said proximity sensor means and based on the operative program respectively set.

16. Plant according to claim 15, **characterized by** an abutment stationary guide member (110) opposite to said abutment edge (105), delimiting the space for passage of a box and displaceable in the requested regulation position by acting on to a relative regulation screw (111).

17. Plant according to claim 15, **characterized in that** said control means comprise a retainer cylinder (112) provided with a rectilinear shank (113) displaceable from an extracted to a retracted position, and vice versa, respectively for stopping and permitting the advancement of a box on to said additional conveyor means (32), said retainer cylinder (112) being mounted on to a support structure (114) fixed to a side guide member (115) of said additional conveyor means (32), secured to said support structure (98), said retainer cylinder (112) being joined mechanically with photocell means (116) or the like, situated upstream said cylinder in the advancement direction (E) of said additional conveyor means (32), and able to detect or not the presence of a box, and to operate said third powered means of said additional conveyor means (32) based on the detection which has been effected, in a way that when a box is stopped by said extracted shank (113) and detected by said photocell means (116), these latter provide for stopping the advancement of said additional conveyor means (32), thereby arranging the box in the filling position, with subsequent displacement by said retainer cylinder (112) of the shank (113) in the retracted position, and when the filling operation is ended said additional conveyor means (32) and the box be again advanced, under the condition in which said photocell means (116) do not more detect the box and operate said retainer cylinder (112) to displace the shank (113) in the extracted position.

18. Plant according to claim 17, **characterized in that** said sixth powered means comprise a regulation motor (117) including said distance measuring means (encoder), and a screw with circulation of spheres (118) driven by said regulation motor (117) and engaging correspondent nut screws with circulation of spheres (119) secured to said abutment edge (105), so as to provide for the displacement of said retainer cylinder (112) and said shank (113) into different positions along said additional conveyor means (32), depending on the length of each box, wherein the stroke of said retainer cylinder (112) and said shank (113) is delimited on the rest position of said abutment edge (105) by mechanical end of stroke sensor means, in which also proximity sensor means are situated, able to indicate the 0 (zero) regulation position, and the length of the stroke to be performed, depending on the length of the box, is measured by said distance measuring means by starting from said proximity sensor means, and based on the operative program respectively set.

19. Plant according to the preceding claims, **characterized by** peat cleaning means, constituted by a double-screwing rotating brush (155), secured to said compression box (29), and able to clean the lower surface of the same die from the pressed peat in excess, at the end of each step of introduction of the pressed peat into the cavities (61) of said perforated plate (44).

## Patentansprüche

1. Anlage zum automatischen Abfüllen von gepresstem Torf oder ähnlichem in Behälter zum Anbau von verschiedenen Pflanzen- und Gemüsearten, wie beispielsweise Blumen und Gemüsepflanzen, Blumen- und Pflanzenschulen, wobei die Behälter in Kästen verschiedener Arten, Formen und Größen bereitgestellt werden und die Anlage eine kastenförmige metallische Tragstruktur umfasst, die auf dem Boden abgelegt ist und Fördermittel trägt, welche einen Vorschub in einer Richtung aufweisen und durch eine erste energieangetriebene Einrichtung angetrieben sind, und welche mit Torf oder ähnlichem gefüllt werden kann, welcher in an sich bekannter Weise gefördert wird, wobei die Tragstruktur eine Ladestation und eine Füllstation definiert, welche geeignet sind, in der Anlage den auf die Fördereinrichtung aufgeladenen Torf, welcher durch diese gefördert wird, einzuführen und mit gepresstem Torf oder dergleichen die Behälter zu füllen, wobei die Anlage ferner Torf enthaltende Mittel (kastenähnlicher Behälter) umfasst, die geeignet sind, den durch das Förderband geförderten Torf zu sammeln, und Pressmittel (bewegliches Gesenk), welche durch zweite kraftangetriebene Mittel angetrieben sind, und geeignet sind, zeitweilig den gepressten Torf aufzunehmen und diesen in die Behälter einzuführen, und welche aus einer Ruheposition in eine Arbeitsposition verschiebbar ist und umgekehrt, um teilweise den in den Aufnahmemitteln enthaltenen Torf aufzunehmen und die Behälter mit gepresstem Torf zu füllen, und ferner umfassend zusätzliche Fördermittel, welche bevorzugt in orthogonaler Richtung bezüglich der erstgenannten Fördermittel angeordnet sind, und durch dritte kraftangetriebene Mittel angetrieben sind, um wahlweise die Kästen mit den Behältern, welche darauf durch die Entstapelmittel geladen sind, zu fördern, und zwar zunächst entsprechend der Füllstation, in welche die Behälter durch die Pressmittel gepressten Torf gefüllt werden, welche in ihre Arbeitsposition verschoben sind, und dann entsprechend dem Entladebereich selbiger Kästen, in welchem die Kästen mit den gefüllten Behältern abgezogen werden, um zu ihrem Bestimmungsort geliefert zu werden, **dadurch gekennzeichnet, dass** die Pressmittel (13) in einem Tragrahmen (41) montiert und an der Tragstruktur (6) befestigt erste und zweite bewegliche Mittel (39, 58; 40, 78) umfassen, welche mit dritten ortsfesten Mitteln (44) zusammenarbeiten, welche eine Vielzahl von Hohlräumen (61) definieren, die geeignet sind, zeitweilig mit gepresstem Torf oder dergleichen gefüllt zu werden, und in einer Anordnung verteilt sind, welche der der Behälter in jedem Kasten (109) entspricht, wobei erste und zweite bewegliche Mittel (39, 58; 40, 78) getrennt voneinander durch entsprechende Betätigungsmittel (Hydraulikzylinder 53, 54) verschiebbar sind, welche mit Entfernungsmesseinrichtungen (55, 56) verbunden sind, und zwar von einer angehobenen zu einer abgesenkten Position bzw. umgekehrt, um zeitweilig die Hohlräume (61) mit gepresstem Torf zu füllen, wenn genannte Pressmittel (13) in ihre Ruheposition verschoben sind und um den gepressten Torf aus den Hohlräumen (61) herauskommen zu lassen und in die Behälter gefördert zu werden, wenn die genannten Pressmittel (13) in ihre Arbeitsposition verschoben sind, wobei genannte Pressmittel (13) ferner Anti-Verdrehungsmittel (62, 63, 64, 65; 83, 84, 87, 88) umfassen, um einige Verdrehungen der ersten und zweiten beweglichen Mittel (39, 58; 40, 78) zu verhindern, indem diese ständig parallel zueinander während der vertikalen Verschiebung derselben gehalten werden, und ferner **gekennzeichnet durch** Kompressionsmittel (31), welche einen Kasten (29) betätigen, welcher mindestens eine offene Kammer (28) mit variablem Volumen begrenzt, die mit Torf oder dergleichen gefüllt werden kann, welcher aus dem kastenähnlichen Behälter (11) kommt und mit den Pressmitteln zusammenarbeitet, wenn letztere in ihre Ruheposition verschoben sind, wobei die Kompressionsmittel (31) aus einer angehobenen Position, in welcher der in die offene Kammer (28) eingeführte Torf gegen die Hohlräume (68) zusammengedrückt wird, in eine abgesenkte Position verschiebbar ist, um die offene Kammer (28) mit weiterem Torf zu füllen, wenn die Pressmittel (13) in ihre Arbeitsposition verschoben sind, und umgekehrt, und ferner **gekennzeichnet dadurch, dass** das zusätzliche Fördermittel (32) durch eine Tragstruktur (98) gebildet ist, welches mit einer beweglichen Tragstruktur (101, 105) zusammenarbeitet, die durch elastische Mittel (99) durch Tragmittel (32) getragen sind, welche in die abwechselnde vertikale Richtung gleitbar längs der Tragstruktur (6) sind, und welche durch vierte kraftangetriebene Mittel (120, 122) angetrieben werden können, und zwar von einer abgesenkten Position in eine angehobene Position und umgekehrt, wobei die zusätzlichen Fördermittel (32) bezüglich der Pressmittel (13) von diesen weg beziehungsweise auf diese zu bewegt wird, wenn letztere in ihre Arbeitsposition verschieblich sind, wobei die genannte bewegliche Tragstruktur (101, 105) durch fünfte und sechste kraftangetriebene Mittel (106, 107; 117, 118) betätigt sind, um in unterschiedliche Breiten- und Längen-Steuerungspositionen verschoben zu werden, was von der Größe des Kastens abhängt, der jeweils auf dem zusätzlichen Fördermittel (32) aufgeladen ist, wobei das zusätzliche Fördermittel (32) ferner mit Steuereinrichtungen (112, 113) verbunden ist, die geeignet sind, zeitweilig den Vorschub des genannten zusätzlichen Fördermittels (32) und eines Kastens in einer Position unterhalb des Pressmittels (13), welches in seine Arbeitsposition verschoben ist, zu verhindern, um die Behälter mit gepresstem Torf zu füllen, und geeignet ist, ferner einen derartigen Vorschub des zusätzlichen Fördermittels (32) und des Kastens mit den gefüllten Behältern zuzulassen, und schließlich **dadurch gekennzeichnet, dass** die genannten zweiten, vierten, fünften und sechsten kraftangetriebenen Mittel (48, 49; 120, 122; 106, 107; 117, 118) selbsttätig durch das jeweils eingestellte Betriebsprogramm betätigt werden und mit Entfernungsmessmitteln verbunden sind, und dies in einer Weise dafür zu sorgen, dass die Verschiebung in Positionen erfolgt, die vorab in Abhängigkeit von der Größe jedes Kastens, welcher verwendet wurde, entsprechend dem Pressmittel (13), der Tragmittel (34) und der beweglichen Tragstruktur (101, 105) festgelegt wurde.

2. Anlage nach Anspruch 1, **dadurch gekennzeichnet, dass** der kastenähnliche Behälter (11) auf seiner Unterwandung (27) perforiert ausgebildet ist, um das Durchlassen von darin enthaltenem Torf zu gestatten, und ferner mit mindestens einer geradlinigen und geneigten Ebene (23) versehen ist, welche mittels an sich bekannter Vibrationseinrichtungen (24) während des Einfüllens des Torfes in die Sammelkammer (12), die durch den gleichen kastenförmigen Behälter definiert ist, mit schnellen Vibrationsbewegungen betätigt wird, um das nach unten Gleiten des Torfes längs der Wände des kastenartigen Behälters (11) zu erleichtern, und ferner **dadurch gekennzeichnet** durch Niveausensormittel, welche geeignet sind, ein maximales beziehungsweise ein minimales Füllniveau des Torfes in der Sammelkammer (12) zu erfassen, und um die ersten kraftangetriebenen Mittel zu betätigen, um den Vorschub des Fördermittels (8) zu gestatten, wenn in den kastenförmigen Behälter (11) ein minimales Füllniveau erreicht ist, und um weitere Torfmengen in die Sammelkammer (12) einzuladen, und um den Vorschub des Fördermittels (8) zu verhindern, wenn ein maximales Füllniveau von Torf in den kastenartigen Behälter (11) erreicht ist.

3. Anlage nach Anspruch 2, **dadurch gekennzeichnet, dass** die ersten und zweiten beweglichen Mittel eine erste obere flache Platte (39) und eine zweite untere flache Platte (40) umfassen, welche überlappend und im Abstand zueinander angeordnet sind, und welche durch entsprechende bewegliche Träger (50, 51) auf einem metallischen Tragrahmen (41) gelagert sind, welcher mit dem kastenartigen Behälter (11) verbunden ist und welcher seitlich bezüglich der ersten und zweiten flachen Platte (39, 40) in einer Position angeordnet ist, welcher zwischen letzterer und der Hinterseite der Tragstruktur (6) der Anlage liegt, wobei die erste und zweite flache Platte (39, 40) getrennt voneinander und unabhängig voneinander von der abgesenkten in deren angehobene Position und umgekehrt gleitbar sind, und zwar längs des Tragrahmens (41) in Stellungen, welche durch die Entfernungsmessmittel (Linear-Encoder 55, 56) auf der Basis jeweils eingestellten Betriebsprogramms festgelegt werden.

4. Anlage nach Anspruch 3, **dadurch gekennzeichnet, dass** das dritte ortsfeste Mittel eine perforierte untere Platte (44) umfasst, welche parallel und im Abstand zu genannter erster und zweiter Platte (39, 40) liegt und an dem Tragrahmen (41) befestigt ist.

5. Anlage nach Anspruch 4, **dadurch gekennzeichnet, dass** die zweiten kraftangetriebenen Mittel zur Betätigung der ersten und zweiten Platte (39, 40) und der perforierten unteren Platte (44) durch eine Schraubmutter (47) gebildet sind, welche auf dem oberen Teil des Tragrahmens (41) befestigt ist und durch eine Schraube mit umlaufenden Kugeln (48), welche in das entsprechende Innengewinde der Schraubmutter (47) eingeschraubt und ausgeschraubt werden kann und durch mindestens ein Motorgetriebe (49) drehangetrieben ist, welches mit dem Entfernungsmessmittel (Encoder) verbunden ist, in einer Weise, um die abweichende Längsrichtung der durch die erste und zweite Platte (39, 40) und die perforierte untere Platte (44) gebildete Einheit zu verschieben und dies mit einem Hub der Länge, welche durch die ersten und zweiten mechanischen Sensormittel (21, 22) begrenzt ist und durch die Entfernungsmessmittel (Encoder) gemessen ist, ausgehend von Näherungssensormitteln, welche in der Position der ersten mechanischen Sensormittel (21) angeordnet sind und geeignet sind, die 0 (Null)-Regulierposition anzuzeigen und dies von der Ruheposition, die oberhalb der genannten offenen Kammer (28) des Kompressionsmittels (31) angeordnet ist, zu der Arbeitsposition, welche oberhalb der zusätzlichen Fördermittel (32) angeordnet ist, in welcher der kastenartige Behälter (11) oberhalb der offenen Kammer (28) verschoben wird und mit Torf gefüllt wird und umgekehrt.

6. Anlage nach Anspruch 4, **dadurch gekennzeichnet, dass** die erste obere Platte (39) mit einer Vielzahl von durchgehenden Löchern (57) versehen ist, welche gleichförmig über die Gesamtbreite dieser Platte verteilt sind und dies in Positionen, welche denen der Anordnung von Behältern entspricht, und längs sämtlicher durchgehender Löcher (57) sind entsprechend verlängerte Eindruck anzeigende Stößel (58) angeordnet, die zueinander identisch sind und die gleiche Länge aufweisen, und die an den oberen Teil der ersten Platte (39) befestigt sind, und mit ihren unteren Endabschnitten nach unten vorstehen und geeignet sind, in einer einstellbaren Tiefe in den gepressten Torf einzudringen, welcher in jeden Behälter eingefüllt wird, um entsprechende Hohlräume zur Aufnahme des Saatguts der entsprechenden Anpflanzungen zu sorgen, und **dadurch gekennzeichnet, dass** die genannte untere Platte (40) ferner mit einer Vielzahl von durchgehenden Löchern (77) versehen ist, die gleichmäßig über die Gesamtbreite dieser Platte verteilt sind und dies in den gleichen Positionen wie die durchgehenden Löcher (57) der ersten Platte (39), wobei die durchgehenden Löcher (77) sämtlich mit einer Größe ausgeführt sind, die größer ist als die zuvor genannten durchgehenden Löcher und dies zu dem Zweck, durch diese entsprechend verlängerte Auswerferstößel (78) einzuführen, welche eine Länge aufweisen, die kleiner ist als die der Stößel (58) und welche mit entsprechenden durchgehenden Löchern (79) versehen sind, um durch diese die entsprechenden Stößel (58) einzuführen, wobei die Auswerferstößel (78) an dem oberen Teil der zweiten Platte (40) befestigt und mit unteren Endabschnitten (81) gestalteter Form versehen sind, welche geeignet ist, eine Anschlagsfläche zu formen, gegen welche der in die Behälter eingeführte Torf zusammengedrückt wird, wobei die Auswerferstößel (78) geeignet sind, in die entsprechenden durchgehenden Löcher (61) der perforierten unteren Platte (44) bei jeder vertikalen Gleitposition der zweiten Platte (40) eingeführt zu werden.

7. Anlage nach Anspruch 6, **dadurch gekennzeichnet, dass** die Anti-Verdrehungsmittel durch mindestens ein Paar erster beweglicher Arme (62, 63, 64, 65) gebildet sind, welche mit der ersten oberen Platte (39) zusammenarbeiten, sowie mindestens ein Paar zweiter beweglicher Arme (83, 84, 87, 88), welche mit der zweiten unteren Platte (40) zusammenarbeiten, von denen die ersten beweglichen Arme (62, 63) symmetrisch zueinander ausgebildet und mit vergleichsweise vergrößert geformten Endabschnitten (66, 67) geformt sind, welche entgegengesetzt zueinander stehen und an ein entsprechendes Getriebe (68, 69) angeschlossen sind, welches ständig in Eingriff steht und auf einem Tragkasten (72) verschwenkt wird, welcher an dem Tragrahmen (41) befestigt ist, wobei die ersten beweglichen Arme (62, 63) mit anderen dünn geformten Endabschnitten ausgebildet sind, welche auf dem oberen Teil mit entsprechenden zusätzlichen ersten beweglichen Armen (64, 65) verschwenkt werden, welche identisch zueinander sind und eine begrenzte Länge aufweisen, und auf dem unteren Teil mit den genannten beweglichen Trägern (50) verschwenkt werden, und von denen die zweiten beweglichen Arme (83, 84) identisch zu den ersten beweglichen Armen (62, 63) sind und mit den entsprechenden, ständig miteinander in Eingriff stehenden Zahnrädern (85, 86) zusammenarbeiten, wobei die zweiten beweglichen Arme (83, 84) bezüglich der ersten beweglichen Arme (62, 63) seitlich bewegt werden und auf dem oberen Teil mit entsprechenden zusätzlichen zweiten beweglichen Armen (87, 88) angelenkt sind, welche identisch zueinander sind und eine Länge größer als die der ersten zusätzlichen beweglichen Arme (64, 65) aufweisen und die ebenfalls von letzteren seitlich weg bewegt werden, wobei die zusätzlichen zweiten beweglichen Arme (87, 88) auf dem unteren Teil mit den beweglichen Trägern (51) verschwenkt werden, indem sie durch entsprechende durchgehende Löcher (89) hindurch greifen, die in den beweglichen Trägern (50) vorgesehen sind.

8. Anlage nach Anspruch 7, **dadurch gekennzeichnet, dass** die erste und zweite Platte (39, 40) für Reparatur- und Wartungszwecke und zum Ersatz von den dazugehörigen beweglichen Trägern (50, 51) abmontiert und wieder montiert werden kann, um **dadurch** weitere Gesenke unterschiedlicher Formen, Größen und Arten verwenden zu können.

9. Anlage nach Anspruch 7, **dadurch gekennzeichnet, dass** die erste und zweite Platte (39, 40) mit entsprechenden ersten Verriegelungsmitteln (124, 134) verbunden sind, und dass die untere Platte (44) mit entsprechenden zweiten Verriegelungsmitteln (138, 139) verbunden sind, welche geeignet sind, diese Platten in der Ruheposition und in der Arbeitsposition der Pressmittel (13) zu verriegeln, um die entsprechenden Hohlräume (68) der perforierten unteren Platte (44) mit Torf zu füllen, und die geeignet sind, die genannten Platten zu entriegeln, wenn das Gesenk auseinander genommen wird.

10. Anlage nach Anspruch 9, **dadurch gekennzeichnet, dass** die erste Riegeleinrichtung entsprechend bewegliche Haken (124, 134) umfasst, die zueinander identisch sind und in entsprechenden durchgehenden Öffnungen (125, 135) der genannten beweglichen Träger (50, 51) aufgenommen sind und derart geformt sind, dass sie die entsprechende Platte (39, 40) durch ein relativ bewegliches Gleitstück (130, 136) greifen oder nicht greifen, welches in einem entsprechenden horizontalen durchgehenden Loch (131) der dazugehörigen beweglichen Träger (50, 51) aufgenommen ist und aus einer Riegel- in eine Entriegelposition und umgekehrt durch Steuermittel (öldynamische Zylinder 132, 137) verschiebbar ist, und **dadurch gekennzeichnet, dass** die genannte zweite Riegeleinrichtung ebenfalls entsprechende bewegliche Haken (138, 139) umfasst, welche identisch und symmetrisch zueinander sind und eine unterschiedliche Form wie die anderen beweglichen Haken (124, 134) aufweisen, welche seitlich der genannten perforierten unteren Platte (44) auf dem genannten Tragrahmen (41) montiert sind, und durch Steuereinrichtungen (öldynamische Zylinder 152) in einer Weise verschiebbar sind, dass sie selbige Platte greifen und freigeben.

11. Anlage nach Anspruch 5, **dadurch gekennzeichnet, dass** die genannte offene Kammer (28) auf dem oberen Teil eines Druckkastens (29) vorgesehen ist und durch die Druckmittel 31 in vertikaler Richtung in die genannte Tragstruktur (6) betätigbar ist und dies mit einem Hub, welcher auf dem oberen Teil durch Sensormittel und auf dem unteren Teil durch Ende des Hubs Sensormittel (154) begrenzt ist und vorab geeicht ist, um das Füllen der offenen Kammer (28) mit einer festgelegten Menge von Torf zu bestimmen, welche ausreicht, sämtliche Hohlräume (57) der genannten perforierten unteren Platte (44) zu füllen, wobei die genannte offene Kammer (28) aus einer abgesenkten Position, in welche sie mit dem in dem kastenartigen Behälter (11) enthaltenen Torf gefüllt werden kann, wenn sie oberhalb der genannten Kammer in der Arbeitsposition des genannten Pressmittels (13) angeordnet ist, in eine angehobene Position verschiebbar ist, in welcher sie gegen die Unterfläche (78) der genannten perforierten unteren Kante (44) zusammengedrückt wird, indem die Hohlräume (57) mit Torf gefüllt werden, wenn die genannten Pressmittel (13) in deren Ruheposition verschoben werden.

12. Anlage nach Anspruch 1, **dadurch gekennzeichnet, dass** die genannten Tragmittel (34) durch eine L-förmige Tragstruktur aus Metall gebildet sind, welche durch horizontale Arme (100) und vertikale Arme (102) gebildet ist, an welchen einige Gleitblöcke (123) befestigt sind, welche in der vertikalen Richtung längs entsprechender vertikaler Führungsteile (35, 36) gleiten, die an der Tragstruktur (6) befestigt sind.

13. Anlage nach Anspruch 12, **dadurch gekennzeichnet, dass** die genannten vierten kraftangetriebenen Mittel eine lang gestreckte Schraube mit umlaufenden Kugeln (120) umfasst, welche eine vertikale Erstreckung aufweist, und die in der Mittelposition auf der Vorderseite der genannten Tragstruktur (6) befestigt ist und in Eingriff mit entsprechenden Schraubmuttern mit umlaufenden Kugeln (121) steht, welche an den genannten Armen (102) befestigt sind, und ferner einen bürstenlosen Motor (122) umfasst, welcher die Entfernungsmessmittel (Encoder) enthält und an dem unteren Teil der genannten Tragstruktur befestigt ist und ebenso die Schraube (6) in zwei Drehungsrichtungen drehend antreibt, um **dadurch** das Absenken und Anheben und umgekehrt der genannten zusätzlichen Fördermittel (32) zu erzeugen, wenn der Hub der Tragstruktur (34) am unteren Teil durch mechanische Sensormittel begrenzt ist, die in der unteren Ruheposition selbiger Struktur angeordnet sind zusammen mit Näherungssensormitteln, die geeignet sind, die neue Steuerungsposition anzuzeigen und die angehobene Arbeitsposition der genannten Tragstruktur (34) und der genannten zusätzlichen Fördermittel (32) wird durch die genannten Entfernungsmessmittel (Encoder) bestimmt, indem von den Näherungssensormitteln ausgegangen wird und auf der Basis des jeweils eingestellten Betriebsprogramms und in Abhängigkeit von der Höhe des Kastens, welcher auf den genannten zusätzlichen Fördermitteln (32) angeordnet ist.

14. Anlage nach Anspruch 13, **dadurch gekennzeichnet, dass** genannte bewegliche Tragstruktur (101) nahe den genannten vertikalen Armen (102) angeordnet ist und mit Satteln (103) geformt ist, welche längs entsprechender Führungsglieder (104) gleiten, die an der genannten Tragstruktur (98) befestigt sind und mit einer oberen Platte (105) verbunden sind, welche eine seitliche Anschlagskante definiert, die gegen die genannten zusätzlichen Fördermittel (32) anpassbar ist sowie in einer abweichenden Richtung durch fünfte kraftangetriebene Mittel (106, 107) in verschiedene Breitenriegelpositionen angetrieben ist, was von der Breite jedes Kastens abhängt, der auf die genannten zusätzlichen Fördermittel (32) aufgeladen ist.

15. Anlage nach Anspruch 14, **dadurch gekennzeichnet, dass** das genannte fünfte kraftangetriebene Mittel einen Regelmotor (106) einschließlich der genannten Entfernungsmessmittel (Encoder) und eine Schraube mit umlaufenden Kugeln (107) umfasst, welcher durch den Regelmotor (106) angetrieben ist und in Eingriff mit einer Schraubmutter mit umlaufenden Kugeln (108) steht, die an der genannten beweglichen Tragstruktur (101) befestigt ist und dies in einer derartigen Weise, dass die Anschlagskante (105) aus einer Ruheposition, in welcher sowohl ein mechanischer Grenzschalter, der geeignet ist, den Hub zu begrenzen, und Näherungsschaltermittel befestigt sind, die geeignet sind, die 0 (Null)-Regelposkion anzuzeigen, in unterschiedliche Arbeitspositionen in Richtung der genannten zusätzlichen Fördermittel (32) verschiebbar ist, was von der Breite jedes Kastens abhängt, der auf die genannten zusätzlichen Fördermittel (32) aufgeladen ist, wobei die Hublänge durch die Entfernungsmessmittel ausgehend von den Näherungssensormitteln und auf der Basis des jeweils eingestellten Betriebsprogramms gemessen wird.

16. Anlage nach Anspruch 15, **gekennzeichnet durch** einen ortsfesten Führungsteil (110) als Anschlag gegenüber der genannten Anschlagskante (105), welcher den Raum zum Durchgang eines Kastens begrenzt und in der angeforderten Riegelposition **durch** Einwirkung auf die betreffende Regelschraube (111) verschoben wird.

17. Anlage nach Anspruch 15, **dadurch gekennzeichnet, dass** die genannten Steuermittel einen Haltezylinder (112) umfassen, welcher mit einem geradlinigen Schaft (113) versehen ist, der aus einer ausgefahrenen in eine zurückgezogene Position und umgekehrt verschiebbar ist, um den Vorschub eines Kastens auf das genannte zusätzliche Fördermittel anzuhalten beziehungsweise zuzulassen, wobei der Haltezylinder (112) auf einer Tragstruktur (114) montiert ist, die an einem seitlichen Führungsteil (115) des genannten zusätzlichen Fördermittels (32) befestigt ist, welche ihrerseits an der genannten Tragstruktur (98) befestigt ist, wobei der Haltezylinder (112) mechanisch mit Fotozellen-Mitteln (116) oder dergleichen verbunden ist, welche stromaufwärts des Zylinders in Vorschubrichtung (E) der genannten zusätzlichen Fördermittel (32) angeordnet sind und geeignet sind, die Anwesenheit oder Abwesenheit eines Kastens zu erfassen und die genannten dritten kraftangetriebenen Mitteln der zusätzliche Fördermittel (32) auf Basis dieser Erfassung zu betätigen, welche durchgeführt wird und in einer derartigen Weise, dass, wenn ein Kasten durch den genannten ausgefahrenen Schaft (113) angehalten und durch die genannten Fotozellen-Mittel (116) erfasst wird, diese letzteren für das Anhalten des Vorschubs der genannten zusätzlichen Fördermittel (32) sorgen und **dadurch** den Kasten in der Füllposition anordnen, wonach ein Verschieben des Schafts (113) des Haltezylinders (112) in die zurückgezogene Position erfolgt und wenn die Fülloperation beendet ist, die genannten zusätzlichen Fördermittel (32) und der Kasten erneut vorgeschoben werden, unter der Bedingung, dass die genannten Fotozellen-Mittel (116) den Kasten nicht mehr erfassen und den genannten Haltezylinder (112) zum Verschieben des Schaftes (113) in die ausgefahrene Position betätigen.

18. Anlage nach Anspruch 17, **dadurch gekennzeichnet, dass** die genannten sechsten kraftangetriebenen Mittel einen Regelmotor (117) einschüeßlich der genannten Entfernungsmessmittel (Encoder) und eine Schraube mit umlaufenden Kugeln (118) umfassen, welche durch den Regelmotor (117) angetrieben ist und in Eingriff mit entsprechenden Schraubenmuttern mit umlaufenden Kugeln (119) steht, die an der Anschlagskante (105) befestigt sind, um **dadurch** für die Verschiebung des Haltezylinders (112) und des Schaftes (113) in unterschiedliche Positionen längs der zusätzlichen Fördermittel (32) zu sorgen, und zwar in Abhängigkeit von der Länge jedes Kastens wobei der Hub des genannten Haltezylinders (112) und des Schaftes (113) in der Ruheposition der Anschlagskante (105) durch mechanische Sensormittel für das Ende des Hubs begrenzt ist, in welcher ebenfalls die Näherungssensormittel angeordnet sind, die geeignet sind, die 0 (Null)-Regelposition anzuzeigen und die Länge des durchzuführenden Hubes, die von der Länge des Kastens abhängt, wird durch die genannten Entfernungsmessmittel ausgehend von den Näherungssensormitteln und auf der Basis des jeweils eingestellten Betriebsprogramms gemessen.

19. Anlage nach einem der vorstehenden Ansprüche, **gekennzeichnet durch** Torfreinigungsmittel, welche **durch** eine doppelschraubenförmige drehende Bürste (155) gebildet sind, die an dem Druckkasten (29) befestigt ist, und geeignet ist, die Unterfläche des Gesenks von überschüssigem gepresstem Torf am. Ende jedes Schritts der Einführung des gepressten Torfes in die Hohlräume (61) der genannten perforierten Platte (44) zu reinigen.

## Revendications

1. Installation pour l'introduction automatique de tourbe comprimée ou analogues dans des conteneurs destinés à la culture de plantes et de légumes de divers types, tels que des fleurs et des plantes pour des cultures de légumes, de fleurs et en pépinière, où les conteneurs sont fournis en boîtes de types, de formes et de tailles différents, l'installation comprenant une structure de support métallique en forme de boîte, reposant sur le sol et supportant des moyens de transport à avancement unidirectionnel, entraînés par des premiers moyens moteurs et qui peuvent être remplis de tourbe ou analogues transportés d'une manière connue en soi, ladite structure de support définissant un poste de chargement et un poste de remplissage, capable respectivement d'introduire dans l'installation la tourbe chargée sur lesdits moyens de transport et transportée par ceux-ci, et de remplir de tourbe comprimée ou analogues lesdits conteneurs, l'installation comprenant également des moyens contenant de la tourbe (des conteneurs de type boîte) capables de recueillir la tourbe transportée par ladite bande transporteuse, et des moyens de pression (une matrice mobile) entraînés par des deuxièmes moyens moteurs, et capable de recevoir temporairement la tourbe comprimée et de l'introduire dans lesdits conteneurs, et qui peuvent être déplacés à partir d'une position de repos à une position de travail, et vice versa, respectivement afin de recevoir temporairement la tourbe contenue dans lesdits moyens contenant de la tourbe et de remplir de tourbe comprimée les conteneurs, et comprenant également des moyens de transports supplémentaires agencés de préférence dans une direction orthogonale par rapport auxdits moyens de transport et entraînés par des troisièmes moyens moteurs destinés à transporter de manière sélective les boîtes avec les conteneurs, qui y sont chargés dessus par des moyens de désempilage, d'abord au niveau du poste de remplissage, dans lequel les conteneurs sont remplis de tourbe comprimée par lesdits moyens de pression déplacés dans leur position de travail, et ensuite au niveau de la région de déchargement des mêmes boîtes, dans laquelle les boîtes avec les conteneurs remplis sont prélevées pour être envoyées à destination, **caractérisée en ce que** lesdits moyens de pression (13) comprennent, montés dans un châssis de support (41) fixé à ladite structure de support (6), des premiers et deuxièmes moyens, mobiles (39, 58 ; 40, 78) coopérant avec des troisièmes moyens, fixes (44), définissant une pluralité de cavités (61) adaptées pour être remplies temporairement de tourbe comprimée ou analogues, et distribuées selon un agencement correspondant à celui des conteneurs de chaque boîte (109), lesdits premiers et deuxièmes moyens mobiles (39, 58 ; 40, 78) pouvant être déplacés séparément par des moyens d'actionnement correspondants (des cylindres hydrauliques 53, 54) associés à des moyens de mesure de distance (55, 56), à partir d'une position élevée vers une position abaissée, et vice versa, respectivement afin de remplir temporairement de tourbe comprimée lesdites cavités (61), quand lesdits moyens de pression (13) sont déplacés dans leur position de repos, et pour permettre à la tourbe comprimée de sortir desdites cavités (61) et d'être transportée dans lesdits conteneurs, quand lesdits moyens de pression (13) sont déplacés dans leur position de travail, lesdits moyens de pression (13) comprenant également des moyens anti-torsion (62, 63, 64, 65 ; 83, 84, 87, 88) capables d'empêcher des torsions desdits premiers et deuxièmes moyens mobiles (39, 58 ; 40, 78), en les maintenant constamment parallèles les uns aux autres, durant le coulissement vertical de ces derniers ; **caractérisée** également par des moyens de compression (31) actionnant une boîte (29), délimitant au moins une chambre ouverte (28) au volume variable qui peut être remplie de tourbe ou analogues, provenant dudit conteneur de type boîte (11), et coopérant avec lesdits moyens de pression (13), quand ces derniers sont déplacés dans leur position de repos, lesdits moyens de compression (31) pouvant être déplacés à partir d'une position élevée dans laquelle la tourbe introduite dans ladite chambre ouverte (28) est comprimée contre lesdites cavités (61) à une position abaissée pour remplir ladite chambre ouverte (28) de tourbe supplémentaire, quand lesdits moyens de pression (13) sont déplacés dans leur position de travail, et vice versa, et **caractérisée** également **en ce que** lesdits moyens de transport supplémentaires (32) sont constitués d'une structure de support (98) coopérant avec une structure de support mobile (101, 105), qui sont supportés par le biais de moyens élastiques (99) par des moyens de support (34) coulissant dans la direction verticale alternée le long de ladite structure de support (6), et qui peuvent être entraînés par des quatrièmes moyens moteurs (120, 122), à partir d'une position abaissée à une position élevée, et vice versa, dans lesquelles lesdits moyens de transport supplémentaires (32) sont respectivement éloignés et rapprochés par rapport auxdits moyens de pression (13), quand ces derniers sont déplacés dans leur position de travail, ladite structure de support mobile supplémentaire (101, 105) étant actionnée par des cinquièmes et sixièmes moyens moteurs (106, 107 ; 117, 118) afin d'être déplacée dans différentes positions de régulation de largeur et de longueur, selon la taille de la boîte chargée respectivement sur lesdits moyens de transport supplémentaires (32), lesdits moyens de transport supplémentaires (32) étant également associés à des moyens de commande (112, 113), capables d'empêcher temporairement l'avancement desdits moyens de transport supplémentaires (32) et d'une boîte située en dessous desdits moyens de pression (13) déplacés dans leur position de travail, pour remplir de tourbe comprimée lesdits conteneurs, et capable de permettre un tel avancement desdits moyens de transports supplémentaires (32) et de la boîte avec les conteneurs remplis et enfin **caractérisée en ce que** lesdits deuxièmes, quatrièmes, cinquièmes et sixièmes moyens moteurs (48, 49 ; 120, 122 ; 106, 107 ; 117, 118) sont actionnés automatiquement par le programme opérationnel déterminé respectivement, et associés avec des moyens de mesure de distance, d'une manière telle à effectuer le déplacement dans des positions établies précédemment desdits moyens de pression (13), desdits moyens de support (34) et de la structure de support mobile (101, 105) correspondants, en fonction de la taille de chaque boîte qui a été utilisée.

2. Installation selon la revendication 1, **caractérisée en ce que** ledit conteneur de type boîte (11) est perforé sur sa paroi inférieure (27), afin de permettre le passage de la tourbe contenue à l'intérieur, et est également muni d'au moins un plan rectiligne et incliné (23), actionné avec des mouvements vibrationnels rapides par des moyens de vibration connus en soi (24), durant l'introduction de la tourbe dans la chambre de collecte (12) définie dans le même conteneur de type boîte, afin de rendre plus facile le glissement vers le bas de la tourbe le long des parois du conteneur de type boîte (11), et **caractérisée** également par des moyens de détection de niveau capables de détecter respectivement un niveau de remplissage maximum et un niveau de remplissage minimum de la tourbe dans ladite chambre de collecte (12), et d'actionner lesdits premiers moyens moteurs afin de permettre l'avancement desdits moyens de transport (8) quand un niveau de remplissage minimum dans ledit conteneur de type boîte (11) est atteint, afin de charger des quantités supplémentaires de tourbe dans ladite chambre de collecte (12), et pour empêcher l'avancement desdits moyens de transport (8) quand un niveau de remplissage maximum de tourbe dans ledit conteneur de type boîte (11) est atteint.

3. Installation selon la revendication 2, **caractérisée en ce que** lesdits premiers et deuxièmes moyens mobiles comprennent respectivement une première plaque plane supérieure (39) et une deuxième plaque plane inférieure (40), disposées à chevauchement et éloignées l'une de l'autre, qui sont supportées par des supports mobiles correspondants (50, 51) sur un châssis de support métallique (41), relié audit conteneur de type boîte (11), qui est situé latéralement par rapport auxdites première et deuxième plaques planes (39, 40), en une position comprise entre ces dernières et le côté arrière de ladite structure de support d'installation (6), lesdites première et deuxième plaques planes (39, 40) étant coulissantes séparément et indépendamment l'une de l'autre à partir de leur position abaissée vers leur position élevée, et vice versa, le long dudit châssis de support (41), dans des positions établies par lesdits moyens de mesure de distance (des encodeurs linéaires 55, 56), selon le programme opérationnel respectivement déterminé.

4. Installation selon la revendication 3, **caractérisée en ce que** lesdits troisièmes moyens fixes comprennent une plaque inférieure perforée (44), parallèle à et éloignée desdites première et deuxième plaques (39, 40) et fixée audit châssis de support (41).

5. Installation selon la revendication 4, **caractérisée en ce que** lesdits deuxièmes moyens moteurs pour actionner lesdites première et deuxième plaques (39, 40) et ladite plaque inférieure perforée (44) sont constitués d'un écrou fileté (47) fixé sur la partie supérieure dudit châssis de support (41), et d'une vis à billes (48) qui peut être vissée et dévissée dans le filetage intérieur correspondant dudit écrou fileté (47) et entraînée à rotation par au moins un engrenage à moteur (49) associé auxdits moyens de mesure de distance (des encodeurs), de manière à déplacer dans la direction longitudinale alternée l'ensemble formé par lesdites première et deuxième plaques (39, 40) et ladite plaque inférieure perforée (44), avec une course de longueur délimitée par les premiers et deuxièmes moyens de détection mécanique (21, 22), et mesurée par lesdits moyens de mesure de distance (des encodeurs), commençant à partir des moyens de détection de proximité situés dans la position desdits premiers moyens de détection mécanique (21) et capables d'indiquer la position de régulation 0 (zéro), à partir de la position de repos située au-dessus de ladite chambre ouverte (28) desdits moyens de compression (31), vers la position de travail située au-dessus desdits moyens de transport supplémentaires (32), dans lesquels ledit conteneur de type boîte (11) est déplacé au-dessus de ladite chambre ouverte (28) et la remplit avec de la tourbe, et vice versa.

6. Installation selon la revendication 4, **caractérisée en ce que** ladite première plaque supérieure (39) est munie d'une pluralité de trous traversants (57) distribués uniformément sur la largeur totale de la même plaque, à des positions correspondantes à celles de l'agencement desdits conteneurs, et le long de tous lesdits trous traversants (57) sont insérés des poinçons de signalisation d'impression allongés correspondants (58), identiques les uns aux autres et d'une même longueur, qui sont fixés sur la partie supérieure avec ladite première plaque (39) et qui font saillie vers le bas avec leur parties d'extrémité inférieure (60), adaptés pour pénétrer à une profondeur ajustable dans la tourbe comprimée qui est introduite dans chaque conteneur, afin de fournir des cavités correspondantes pour loger les graines des cultures respectives, et **caractérisée en ce que** ladite deuxième plaque inférieure (40) est également munie d'une pluralité de trous traversants (77) distribués uniformément sur la largeur totale de la même plaque, dans les mêmes positions des trous traversants (57) de ladite première plaque (39), lesdits trous traversants (77) étant tous réalisés d'une taille supérieure à celle des trous traversants précédents, afin de permettre l'introduction à travers ces derniers des poinçons d'extraction allongés correspondants (78), ayant longueur inférieure à celle desdits poinçons (58), et munie de trous traversants (79) pour l'insertion à travers ces derniers des poinçons correspondants (58), lesdits poinçons d'extraction (78) étant fixés sur la partie supérieure à ladite deuxième plaque (40) et étant munis de parties d'extrémité inférieure (81) de forme façonnée, adaptées pour former une surface d'aboutement contre laquelle la tourbe qui doit être introduite dans lesdits conteneurs est comprimée, lesdits poinçons d'extraction (78) étant capables d'être insérés dans les trous traversants correspondants (61) de ladite plaque inférieure perforée (44) à chaque position de coulissement vertical de ladite deuxième plaque (40).

7. Installation selon la revendication 6, **caractérisée en ce que** lesdits moyens anti-torsion comprennent au moins une paire de premiers bras mobiles (62, 63, 64, 65) coopérant avec ladite première plaque, supérieure (39), et au moins une paire de deuxièmes bras mobiles (83, 84, 87, 88) coopérant avec ladite deuxième plaque, inférieure (40), parmi lesquels lesdits premiers bras mobiles (62, 63) sont réalisés en des formes symétriques l'une à l'autre et chacune avec une partie d'extrémité relativement élargie (66, 67), lesdites parties d'extrémité s'opposant l'une contre l'autre et étant fixées chacune à un engrenage correspondant (68, 69), lesdits engrenages étant engrenés fermement entre eux et pivotant sur une boîte de support (72) fixée audit châssis de support (41), lesdits premiers bras mobiles (62, 63) étant réalisés avec des parties de l'autre extrémité de forme fine, qui pivotent sur la partie supérieure de premiers bras mobiles supplémentaires (64, 65), identiques entre eux et ayant une longueur limitée, dont les parties inférieures pivotent avec lesdits supports mobiles (50) ; et parmi lesquels lesdits deuxièmes bras mobiles (83, 84) sont identiques auxdits premiers bras mobiles (62, 63) et coopèrent avec des engrenages relatifs (85, 86) engrenés fermement entre eux, lesdits deuxièmes bras mobiles (83, 84) se déplaçant en s'éloignant latéralement par rapport auxdits premiers bras mobiles (62, 63) et étant articulés sur la partie supérieure de deuxièmes bras mobiles supplémentaires correspondants (87, 88), identiques entre eux et ayant une longueur supérieure à celle desdits premiers bras mobiles supplémentaires (64, 65) et étant en outre plus éloignés latéralement entre eux par rapport à ces derniers, où lesdits deuxièmes bras mobiles supplémentaires (87, 88) ont des parties inférieures qui pivotent avec lesdits supports mobiles (51), en passant à travers des trous traversants respectifs (89) prévus à travers lesdits supports mobiles (50).

8. Installation selon la revendication 7, **caractérisée en ce que** lesdites première et deuxième plaques (39, 40) peuvent être assemblées aux, et désassemblées des supports mobiles relatifs (50, 51) pour des opérations de réparation et de maintenance et de remplacement de la matrice par d'autres matrices, de formes, de tailles et de types différents.

9. Installation selon la revendication 7, **caractérisée en ce que** lesdites première et deuxième plaques (39, 40) sont associées à des premiers moyens de verrouillage correspondants (124, 134), et ladite plaque inférieure (44) est associée avec des deuxièmes moyens de verrouillage correspondants (138, 139), qui sont capables de verrouiller les mêmes plaques à la fois dans la position de repos et la position de travail desdits moyens de pression (13), pour remplir de tourbe les cavités relatives (61) de ladite plaque inférieure perforée (44), et sont capables de déverrouiller les mêmes plaques quand la matrice est désassemblée.

10. Installation selon la revendication 9, **caractérisée en ce que** lesdits premiers moyens de verrouillage comprennent des crochets mobiles correspondants (124, 134) identiques les uns aux autres, logés dans des ouvertures traversantes respectives (125, 135) desdits supports mobiles (50, 51), et formés de manière à mettre en prise ou ne pas mettre en prise la plaque correspondante (39, 40), par un coulisseau mobile relatif (130, 136) logé dans un trou traversant horizontal correspondant (131) des supports mobiles relatifs (50, 51) et déplaçables à partir d'une position de verrouillage vers une position de déverrouillage, et vice versa, par le biais de moyens de commande (des cylindres oléodynamiques 132, 137), et **caractérisée en ce que** lesdits deuxièmes moyens de verrouillage comprennent également des crochets mobiles correspondants (138, 139) identiques et symétriques entre eux et avec une forme différente de celle des autres crochets mobiles (124, 134), qui sont montés sur ledit châssis de support (41) latéralement par rapport à ladite plaque inférieure perforée (44) et peuvent être déplacés par des moyens de commande (des cylindres oléodynamiques 152) de manière à mettre en prise et libérer la même plaque.

11. Installation selon la revendication 5, **caractérisée en ce que** ladite chambre ouverte (28) est prévue sur la partie supérieure d'une boîte de compression (29), actionnée dans la direction verticale par lesdits moyens de compression (31) dans ladite structure de support (6), avec une course délimitée sur la partie supérieure par des moyens de détection et sur la partie inférieure par une extrémité des moyens de détection de course (154), calibrée à l'avance pour déterminer le remplissage de la chambre ouverte (28) d'une quantité établie de tourbe, suffisante pour remplir toutes les cavités (57) de ladite plaque inférieure perforée (44), ladite chambre ouverte (28) étant déplaçable à partir d'une position abaissée, dans laquelle elle peut être remplie avec la tourbe contenue dans ledit conteneur de type boîte (11), quand il est déplacé au-dessus de la même chambre, en position de travail desdits moyens de pression (13), vers une position élevée dans laquelle elle est comprimée contre la surface inférieure (78) de ladite plaque inférieure perforée (44), en remplissant de tourbe lesdites cavités (57), quand lesdits moyens de pression (13) sont déplacés à leur position de repos.

12. Installation selon la revendication 1, **caractérisée en ce que** lesdits moyens de support (34) sont constitués d'une structure de support métallique en forme de L formée par des bras horizontaux (100) et des bras verticaux (102), auxquels un certain nombre de blocs de coulissement (123) sont fixés, qui coulissent dans la direction verticale le long d'éléments de guidage verticaux correspondants (35, 36) fixés à ladite structure de support (6).

13. Installation selon la revendication 12, **caractérisée en ce que** lesdits quatrièmes moyens moteurs comprennent une vis à billes allongée (120) ayant une étendue verticale, fixée sur la position centrale du côté avant de ladite structure de support (6) et mettant en prise des écrous filetés à billes (121) fixés auxdits bras verticaux (102), et comprennent également un engrenage à moteur sans balai (122) comprenant ledit moyen de mesure de distance (un encodeur) et fixés à la partie inférieure de ladite structure de support (6) mettant également en rotation ladite vis à billes (12) dans ses deux directions de rotation, de manière à réaliser l'abaissement et l'élévation, et vice versa, desdits moyens de transport supplémentaires (32), où la course de ladite structure de support (34) est délimitée sur la partie inférieure par des moyens de détection mécanique, situés dans la position de repos inférieure de la même structure, conjointement à des moyens de détection de proximité capables d'indiquer la position de régulation 0 (zéro), et la position de travail élevée de ladite structure de support (34) et desdits moyens de transport supplémentaires (32) est déterminée par ledit moyen de mesure de distance (un encodeur), en commençant à partir desdits moyens de détection de proximité et selon le programme opérationnel respectivement prédéterminé, et en fonction de la hauteur de la boîte disposée sur lesdits moyens de transport supplémentaires (32).

14. Installation selon la revendication 13, **caractérisée en ce que** ladite structure de support mobile (101) est située à proximité desdits bras verticaux (102) et est formée avec des glissières (103), coulissant le long d'éléments de guidage correspondants (104) fixés à ladite structure de support (98), et reliés à une plaque supérieure (105) définissant un bord d'aboutement latéral, adaptable contre lesdits moyens de transport supplémentaires (32) ainsi qu'entraîné dans une direction alternée par des cinquièmes moyens moteurs (106, 107), dans différentes positions de régulation de largeur, selon la largeur de chaque boîte chargée sur lesdits moyens de transport supplémentaires (32).

15. Installation selon la revendication 14, **caractérisée en ce que** lesdits cinquièmes moyens moteurs comprennent un moteur de régulation (106) comprenant ledit moyen de mesure de distance (un encodeur), et une vis à billes (107) entraînée par ledit moteur de régulation (106) et mettant en prise un écrou fileté à billes (108) fixé à ladite structure de support mobile (101), d'une telle façon que ledit bord d'aboutement (105) puisse être déplacé depuis une position de repos, dans laquelle sont fixés à la fois un commutateur de limite mécanique, capable de délimiter la course, et un moyen de détection de proximité capable d'indiquer la position de régulation 0 (zéro), à différentes positions de travail vers lesdits moyens de transport supplémentaires (32), selon la largeur de chaque boîte chargée sur lesdits moyens de transport supplémentaires (32), où la longueur de course est mesurée par ledit moyen de mesure de distance, en commençant à partir dudit moyen de détection de proximité et en fonction du programme opérationnel respectivement prédéterminé.

16. Installation selon la revendication 15, **caractérisée par** un élément de guidage d'aboutement fixe (110) opposé audit bord d'aboutement (105), délimitant l'espace de passage d'une boîte et étant déplaçable dans la position de régulation requise en agissant sur une vis de régulation relative (111).

17. Installation selon la revendication 15, **caractérisée en ce que** lesdits moyens de commande comprennent un cylindre d'arrêt (112) muni d'une tige rectiligne (113) déplaçable à partir d'une position extraite vers une position rétractée, et vice versa, respectivement pour arrêter et pour permettre l'avancement d'une boîte sur lesdits moyens de transport supplémentaires (32), ledit cylindre d'arrêt (112) étant monté sur une structure de support (114) fixée à un élément de guidage latéral (115) desdits moyens de transport supplémentaires (32), fixé à ladite structure de support (98), ledit cylindre d'arrêt (112) étant relié mécaniquement à des moyens à cellule photoélectrique (116) ou analogues, situés en amont dudit cylindre dans la direction d'avancement (E) desdits moyens de transport supplémentaires (32), et capables de détecter ou non la présence d'une boîte, et d'actionner lesdits troisièmes moyens moteurs desdits moyens de transport supplémentaires (32) en fonction de la détection qui a été réalisée, d'une telle façon que quand une boîte est arrêtée par ladite tige extraite (113) et est détectée par lesdits moyens à cellule photoélectrique (116), ces derniers assurent l'arrêt de l'avancement desdits moyens de transport supplémentaires (32), en agençant ainsi la boîte dans la position de remplissage, avec un déplacement ultérieur par ledit cylindre d'arrêt (112) de la tige (113) dans sa position rétractée, et quand l'opération de remplissage est terminée, lesdits moyens de transport supplémentaires (32) et la boîte avancent à nouveau, dans la condition où lesdits moyens à cellule photoélectrique (116) ne détectent plus la boîte et actionnent ledit cylindre d'arrêt (112) pour déplacer la tige (113) dans sa position extraite.

18. Installation selon la revendication 17, **caractérisée en ce que** lesdits sixièmes moyens moteurs comprennent un moteur de régulation (117) comprenant ledit moyen de mesure de distance (un encodeur), et une vis à billes (118) entraînée par ledit moteur à régulation (117) et mettant en prise des écrous filetés à billes correspondants (119) fixés audit bord d'aboutement (105), de manière à réaliser le déplacement dudit cylindre d'arrêt (112) et de ladite tige (113) dans différentes positions le long desdits moyens de transport supplémentaires (32), en fonction de la longueur de chaque boîte, où la course dudit cylindre d'arrêt (112) et de ladite tige (113) est délimitée sur la position de repos dudit bord d'aboutement (105) par une extrémité mécanique des moyens de détection de course, dans laquelle des moyens de détection de proximité sont également situés, capable d'indiquer la position de régulation 0 (zéro), et la longueur de la course devant être réalisée, en fonction de la longueur de la boîte, est mesurée par lesdits moyens de mesure de distance en commençant à partir desdits moyens de détection de proximité, et en fonction du programme opérationnel respectivement prédéterminé.

19. Installation selon les revendications précédentes, **caractérisée par** des moyens de nettoyage de tourbe, constitués par une brosse rotative à double vis (155), fixée à ladite boîte de compression (29), et capable de nettoyer la surface inférieure de la même matrice de la tourbe comprimée en excès, à la fin de chaque étape d'introduction de la tourbe comprimée dans les cavités (61) de ladite plaque perforée (44).
